# EUROPEAN PATENT APPLICATION

(11) **EP 4 632 933 A1**
(43) Date of publication of application: **15.10.2025**
(21) Application number: 23933351.1
(22) Date of filing: 17.04.2023
(51) Int. Cl.: H01M 50/449, H01M 50/409, H01M 50/446, H01M 10/0525

(54) **SEPARATOR, BATTERY CELL, BATTERY, AND ELECTRIC DEVICE**

(71) Applicant: Contemporary Amperex Technology Co., Limited, Ningde, Fujian 352100 (CN)
(72) Inventor: JIN, Haizu, Ningde, Fujian 352100 (CN); PENG, Lin, Ningde, Fujian 352100 (CN); PENG, Shuangjuan, Ningde, Fujian 352100 (CN); LI, Baiqing, Ningde, Fujian 352100 (CN); ZHAO, Fenggang, Ningde, Fujian 352100 (CN)
(74) Representative: Kraus & Lederer PartGmbB
(86) International application number: PCT/CN2023/088799
(87) International publication number: WO 2024/216471

(57) **Abstract**

Provided in the present application are a separator, a battery cell, a battery, and an electrical apparatus. The separator comprises a separator body and a polymer layer disposed on at least one surface of the separator body, wherein the polymer layer comprises a liquid-retaining polymer. The liquid-retaining polymer is added to a first solvent at 70°C to form a polymer system, the polymer system is left to stand at 70°C for 8 h, and after standing at 25°C for more than or equal to 24 h, the polymer system is filtered by means of a 200-mesh filter screen, thereby leaving a first substance, wherein the mass of the liquid-retaining polymer is q, the unit thereof being g; the mass of the first substance is m, the unit thereof being g; and the liquid-retaining polymer and the first substance satisfy: 5≤m/q≤1000. The bonding force of the separator is greater than or equal to 10 N/m.

## Description

### TECHNICAL FIELD

The present application relates to the field of batteries, in particular to a separator, a battery cell, a battery and an electrical apparatus.

### BACKGROUND

Because of characteristics of a high capacity, a long service life and the like, battery cells are widely used in electronic devices, such as mobile phones, laptops, electromobiles, electric cars, electric airplanes, electric ships, electric toy cars, electric toy ships, electric toy airplanes, and electric tools.

As the application range of batteries becomes more and more extensive, the requirements on the performance of the batteries are becoming increasingly stringent. However, the current cycle performance of the battery cells is poor and still needs to be further improved.

### SUMMARY OF THE INVENTION

Embodiments of the present application are conducted in view of the above issues, and aim to provide a separator, a battery cell, a battery and an electrical apparatus.

A first aspect of the present application provides a separator. The separator includes a separator body and a polymer layer disposed on at least one surface of the separator body, and the polymer layer includes a liquid-retaining polymer. The separator includes the separator body and the polymer layer disposed on at least one surface of the separator body, wherein the liquid-retaining polymer is added to a first solvent at 70°C to form a polymer system, the polymer system is left to stand at 70°C for 8 h, and after standing at 25°C for more than or equal to 24 h, the polymer system is filtered by means of a 200-mesh filter screen, thereby leaving a first substance, wherein mass of the liquid-retaining polymer is q, and a unit thereof is g; mass of the first substance is m, and a unit thereof is g; and the liquid-retaining polymer and the first substance satisfy: 5≤m/q≤1000. A bonding force of the separator is greater than or equal to 10 N/m.

Therefore, the separator of the embodiment of the present application includes the polymer layer, the polymer layer includes the liquid-retaining polymer, and the separator has excellent bonding performance, so that the separator and an electrode plate are tightly bonded, thereby alleviating liquid shortage caused by an increase in a gap between the electrode plates during the battery cycle, and improving cycle performance of a battery cell. On the other hand, the liquid-retaining polymer is disposed on the surface of the separator, the liquid-retaining polymer is in contact with an electrolyte solution, polymer molecular chains stretch and open, the electrolyte solution can diffuse between the molecular chains, the polymer molecular chains swell and adsorb, so as to construct and form a three-dimensional connection network between the separator and the electrolyte solution. The three-dimensional connection network can be attached to a surface of the electrode plate, to bond the separator and the electrode plate as a whole, thereby further improving stability of the electrode plate and a diaphragm structure, and improving the cycle performance of the battery cell. Moreover, the three-dimensional connection network can lock the electrolyte solution in the three-dimensional connection network, so that the electrolyte solution can be maintained in the electrode plate and the diaphragm structure, which is beneficial to improving an ion transmission interface and the transmission of active ions such as lithium ions and sodium ions, and can further improve the cycle performance of the battery cell.

In some embodiments, the bonding force of the separator is in a range from 10 N/m to 30 N/m. When the bonding force of the separator is within the above range, the separator has better bonding performance, which is beneficial to improving the connection stability between the separator and the electrode plate. During a charge and discharge cycle of the battery cell, a risk of an increased spacing between the separator and the electrode plate is reduced, thereby enabling an electrode assembly to adsorb more electrolyte solution, which is beneficial to improving the cycle performance.

In some embodiments, the polymer layer includes a bonding polymer, and the bonding polymer includes one or more of epoxy resins, polyurethanes, organic silicons, polyimides, polyacrylates, polymethacrylates, and polyvinyl acetates (VAE emulsions). The above bonding polymer has a good bonding property.

Further optionally, the polyacrylates include polyethyl acrylate.

In some embodiments, based on total mass of the polymer layer, a ratio of the mass percentage of the liquid-retaining polymer to the mass percentage of the bonding polymer is (1-9):1. When the ratio of the mass percentage of the liquid-retaining polymer to the mass percentage of the bonding polymer is within the above range, both the adhesiveness and a gel property of the polymer layer can be improved.

In some embodiments, the liquid-retaining polymer includes a fluoropolymer; crystallinity of the fluoropolymer measured by differential scanning calorimetry is Xc₁, 0<Xc₁≤30%; and the melting temperature of the fluoropolymer is Tₘ₁, a unit thereof is °C, and 0<Tₘ₁≤140.

In some embodiments, the glass transition temperature of the fluoropolymer is T_{g1}, a unit thereof is °C, and -150≤T_{g1}≤60.

In some embodiments, the fluoropolymer includes at least one of a building block represented by formula (AI) to a building block represented by formula (AIII), 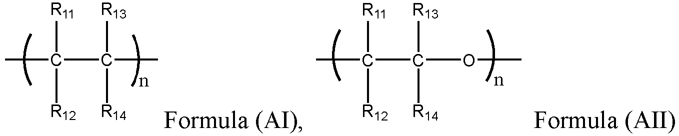
in formula (AI) and formula (AII), R₁₁, R₁₂, R₁₃ and R₁₄ each independently include a hydrogen atom, a fluorine atom, a bromine atom, substituted or unsubstituted C1-C3 alkyl, or substituted or unsubstituted C1-C3 alkoxy, and at least one of R₁₁, R₁₂, R₁₃ and R₁₄ contains a fluorine atom; 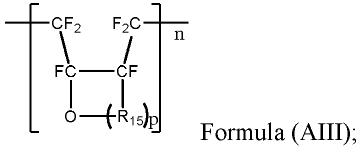
in formula (AIII),
R₁₅ includes a single bond, and substituted or unsubstituted C1-C3 alkyl; p is a positive integer selected from 1 to 3; and n is a positive integer selected from 1000 to 30000.

In some embodiments, the liquid-retaining polymer further includes an ether polymer, and the ether polymer is made into a sheet-like structure; the sheet-like structure obtains an elastic modulus G'-loss modulus G" curve through dynamic frequency scanning test at (Tₘ₂+20)°C, the slope of the elastic modulus G'-loss modulus G" curve is K₁, 1<K₁<∞, and Tₘ₂°C represents the melting temperature of the ether polymer; optionally, 1<K₁≤100; and further optionally, 1<K₁≤10.

In some embodiments, the ether polymer includes a building block represented by formula (BI) and/or a building block represented by formula (BII), 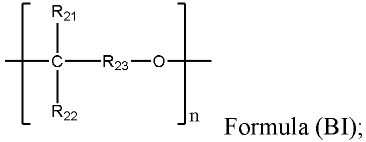
in formula (BI), R₂₁ and R₂₂ each independently include a hydrogen atom, substituted or unsubstituted C1-C3 alkyl, or substituted or unsubstituted C1-C3 alkoxy; and R₂₃ includes substituted or unsubstituted C1-C5 alkylene; 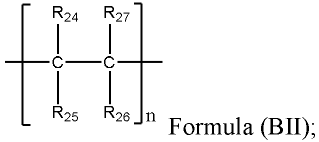
in formula (BII), R₂₄ to R₂₇ each independently include a hydrogen atom, substituted or unsubstituted C1-C3 alkyl, substituted or unsubstituted C1-C3 alkoxy or an ether group, and at least one of R₂₄ to R₂₇ includes substituted or unsubstituted C1-C3 alkoxy or an ether group.

In some embodiments, the liquid-retaining polymer includes an ester polymer, and the ester polymer is made into a sheet-like structure; the sheet-like structure obtains an elastic modulus G'-loss modulus G" curve through dynamic frequency scanning test at (Tₘ₃+20)°C, the slope of the elastic modulus G'-loss modulus G" curve is K₂, 1<K₂<∞, and Tₘ₃°C represents the melting temperature of the ester polymer; optionally, 1<K₂≤100; and further optionally, 1<K₂≤10.

In some embodiments, the ester polymer includes a building block represented by formula (CI) and/or a building block represented by formula (CII), 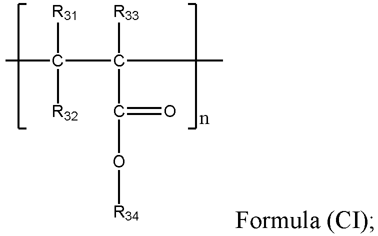
in formula (CI), R₃₁, R₃₂ and R₃₃ each independently include a hydrogen atom or substituted or unsubstituted C1-C8 alkyl; and R₃₄ includes substituted or unsubstituted C1-C8 alkyl, or substituted or unsubstituted C1-C8 hydroxyalkyl; 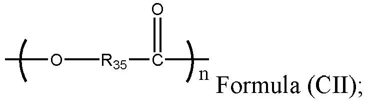
in formula (CII), R₃₅ includes substituted or unsubstituted C2-C6 methylene; and optionally, R₃₅ each independently includes substituted or unsubstituted C2-C4 methylene.

In some embodiments, the liquid-retaining polymer includes an aldehyde-ketone polymer, and the aldehyde-ketone polymer is made into a sheet-like structure; the sheet-like structure obtains an elastic modulus G'-loss modulus G" curve through dynamic frequency scanning test at (Tₘ₄+20)°C, the slope of the elastic modulus G'-loss modulus G" curve is K₃, 0.8≤K₃<∞, and Tₘ₄°C represents the melting temperature of the aldehyde-ketone polymer; optionally, 0.8≤K₃≤100; and further optionally, 0.8≤K₃≤10.

In some embodiments, the aldehyde-ketone polymer includes a building block represented by formula (DI) and/or a building block represented by formula (DII), 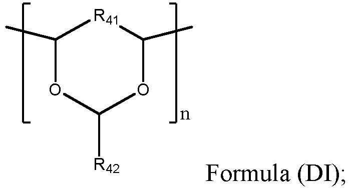
in formula (DI), R₄₁ includes a single bond, and substituted or unsubstituted C1-C6 methylene; and R₄₂ includes a hydrogen atom, and substituted or unsubstituted C1-C6 alkyl; 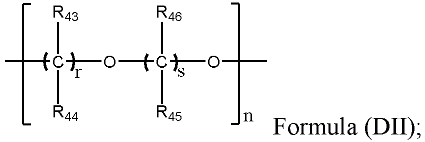
in formula (DII), R₄₃ to R₄₆ each independently include a hydrogen atom, hydroxyl, substituted or unsubstituted C1-C3 alkyl, substituted or unsubstituted C1-C3 hydroxyalkyl, or substituted or unsubstituted C1-C3 alkoxy; and r and s are each independently selected from integers in a range from 0 to 5, and at least one of r and s is selected from a positive integer.

In some embodiments, the molecular weight of the liquid-retaining polymer is in a range from 1.2×10⁵g/mol to 1.0×10⁶g/mol.

In some embodiments, the separator body includes a substrate, and the polymer layer is disposed on at least one surface of the substrate.

In some embodiments, the separator body includes a substrate and a heat-resistant coating, the heat-resistant coating is disposed on at least one surface of the substrate, and the polymer layer is disposed on a surface of the heat-resistant coating facing away from the substrate.

In some implementations, the polymer layer further includes heat-resistant particles. A synergistic effect of the heat-resistant particles and the liquid-retaining polymer can further improve overall heat resistance and ion transmission performance of the separator.

In some embodiments, a coating weight of the polymer layer ranges from 0.5 mg/1540.25 mm² to 5 mg/1540.25 mm².

When a thickness of the polymer layer is within the above range, the overall heat resistance and ion transmission performance of the separator can further be improved.

A second aspect of the present application provides a battery cell, including the separator according to any embodiment of the first aspect of the present application.

A third aspect of the present application provides a battery, including a battery cell according to any embodiment of the second aspect of the present application.

A fourth aspect of the present application provides an electrical apparatus, including the battery according to any embodiment of the third aspect of the present embodiment.

### BRIEF DESCRIPTION OF DRAWINGS

In order to illustrate technical solutions of the examples of the present application more clearly, a brief introduction of drawings to be used in the examples of the present application will be made below. Apparently, the drawings described below are merely some examples of the present application, and other drawings can be obtained according to these drawings by those skilled in the art without creative efforts.
FIG. 1 is a schematic view of an embodiment of a battery cell of the present application;
FIG. 2 is a schematic exploded view of the embodiment of the battery cell in FIG. 1;
FIG. 3 is a schematic view of an embodiment of a battery module of the present application;
FIG. 4 is a schematic view of an embodiment of a battery pack of the present application;
FIG. 5 is a schematic exploded view of the embodiment of the battery pack as shown in FIG. 4;
FIG. 6 is a schematic view of an embodiment of an electrical apparatus using a battery cell of the present application as a power supply.

The drawings may not be drawn according to the actual scale.

### Description of reference numerals:

1, Battery pack; 2, Upper box body; 3, Lower box body; 4, Battery module;
5, Battery cell; 51, Case; 52, Electrode assembly;
53, Cover plate;
6, Electrical apparatus.

### DETAILED DESCRIPTION

Hereinafter, embodiments specifically disclosing a separator, a battery cell, a battery and an electrical apparatus of the present application are described in detail. However, there may be cases where unnecessary detailed descriptions are omitted. For example, there are cases where detailed descriptions of well-known items and repeated descriptions of actually identical structures are omitted. This is to avoid unnecessary redundancy in the following descriptions and to facilitate understanding by those skilled in the art. In addition, the drawings and subsequent descriptions are provided for those skilled in the art to fully understand the present application, and are not intended to limit the subject matter recited in the claims.

"Ranges" disclosed in the present application are defined in the form of lower limits and upper limits, a given range is defined by the selection of a lower limit and an upper limit, and the selected lower limit and upper limit define boundaries of a particular range. A range defined in this manner may be inclusive or exclusive of end values, and may be arbitrarily combined, that is, any lower limit may be combined with any upper limit to form a range. For example, if the ranges of 60-120 and 80-110 are listed for a particular parameter, it is understood that the ranges of 60-110 and 80-120 are also contemplated. Additionally, if the minimum range values 1 and 2 are listed, and if the maximum range values 3, 4 and 5 are listed, the following ranges are all contemplated: 1-3, 1-4, 1-5, 2- 3, 2-4 and 2-5. In the present application, unless stated otherwise, the numerical range "a-b" represents an abbreviated representation of any combination of real numbers between a to b, where both a and b are real numbers. For example, the numerical range "0-5" means that all the real numbers between "0-5" have been listed herein, and "0-5" is just an abbreviated representation of combinations of these numerical values. In addition, when a parameter is expressed as an integer greater than or equal to 2, it is equivalent to disclosing that the parameter is, for example, an integer of 2, 3, 4, 5, 6, 7, 8, 9, 10, 11, 12, and the like.

Unless otherwise specified, all embodiments and optional embodiments of the present application may be combined with each other to form new technical solutions. Unless otherwise specified, all technical features and optional technical features of the present application may be combined with each other to form new technical solutions.

If not specifically stated, all steps of the present application may be performed sequentially or randomly, preferably sequentially. For example, a method includes steps (a) and (b), meaning that the method may include steps (a) and (b) performed sequentially, or may include steps (b) and (a) performed sequentially. For example, the reference to the fact that the method may further include step (c), meaning that step (c) may be added to the method in any order. For example, the method may include steps (a), (b) and (c), or may further include steps (a), (c) and (b), or may further include steps (c), (a) and (b), and the like.

Unless otherwise specifically stated, "including" and "containing" mentioned in the present application may be open-ended, or may be closed-ended. For example, "including" and "containing" may indicate that it is possible to include or contain other components not listed, and it is also possible to include or contain only the listed components.

If not specifically stated, the term "or" is inclusive in the present application. For example, the phrase "A or B" means "A, B, or both A and B." More specifically, the condition "A or B" is satisfied under any one of the following conditions: A is true (or present) and B is false (or absent); A is false (or absent) and B is true (or present); or both A and B are true (or present).

In the present application, the terms "a plurality of" and "multiple" refer to two or more.

The term "alkyl" encompasses both straight and branched chain alkyl. For example, the alkyl may be a C1-C5 alkyl, C1-C4 alkyl, C1-C3 alkyl, or C1-C2 alkyl. In some embodiments, the alkyl includes methyl, ethyl, propyl, isopropyl, butyl, isobutyl, and the like. Additionally, the alkyl may be optionally substituted. When substituted, substituents include fluorine atoms.

The term "alkoxy" refers to a group in which alkyl is connected to an oxygen atom via a single bond. For example, the alkoxy may be C₁-C₅ alkoxy, a C₁-C₃ alkoxy, or C₁-C₂ alkoxy. In some embodiments, the alkoxy may include methoxy, ethoxy, and propoxy. Additionally, alkoxy may be optionally substituted.

The term "halogen atom" means a fluorine atom, a chlorine atom, a bromine atom or the like.

The term "hydrogen" refers to 1H (protium, H), 2H (deuterium, D) or 3H (tritium, T). In various examples, "hydrogen" may be 1H (protium, H).

A battery cell includes a positive electrode plate, a negative electrode plate, a separator, and an electrolyte solution. The separator is located between the positive electrode plate and the negative electrode plate, so as to isolate the positive electrode plate from the negative electrode plate. During the charge and discharge cycle of the battery cell, an electrode assembly expands in volume, especially in a later cycle stage of the battery cell, the expansion force is higher, resulting in an increase in a spacing between the electrode plate and the separator, and a higher risk of liquid shortage and bridge breakage of the electrode plate, which may deteriorate cycle performance of the battery cell and shorten a cycle life of the battery cell.

In view of the above problem, an embodiment of the present application provides a separator. The separator includes a polymer layer, the polymer layer includes a bonding polymer and a liquid-retaining polymer, a surface of the separator is coated with the bonding polymer, so that the separator has excellent adhesion, and the separator and an electrode plate are tightly bonded, thereby alleviating liquid shortage caused by an increase in a gap between the electrode plates during the battery cycle, and improving cycle performance of a cell. On the other hand, when the liquid-retaining polymer is in contact with an electrolyte solution, polymer molecular chains stretch and open, the electrolyte solution can diffuse between the molecular chains, the polymer molecular chains swell and adsorb, so as to construct and form a three-dimensional connection network between the separator and the electrolyte solution. The three-dimensional connection network can be attached to a surface of the electrode plate, to bond the separator and the electrode plate as a whole, thereby further improving stability of the electrode plate and a separator structure, and improving the cycle performance of the battery cell. Moreover, the three-dimensional connection network can lock the electrolyte solution in the three-dimensional connection network, so that the electrolyte solution can be maintained in the electrode plate and a diaphragm structure, which is beneficial to improving an ion transmission interface and the transmission of active ions such as lithium ions and sodium ions, and can further improve the cycle performance of the battery cell.

### Separator

In a first aspect, an embodiment of the present application provides a separator. The separator includes a separator body and a polymer layer disposed on at least one surface of the separator body, and the polymer layer includes a liquid-retaining polymer, wherein the liquid-retaining polymer is added to a first solvent at 70°C to form a polymer system, the polymer system is left to stand at 70°C for 8 h, and after standing at 25°C for more than or equal to 24 h, the polymer system is filtered by means of a 200-mesh filter screen, thereby leaving a first substance, wherein mass of the liquid-retaining polymer is q, and a unit thereof is g; mass of the first substance is m, and a unit thereof is g; and the liquid-retaining polymer and the first substance satisfy: 5≤m/q≤1000. A bonding force of the separator is greater than or equal to 10 N/m.

The separator has excellent adhesion, so that the separator and an electrode plate are tightly bonded, thereby alleviating liquid shortage caused by an increase in a gap between the electrode plates during the battery cycle, and improving cycle performance of a cell.

In some embodiments, 10≤m/q≤1000; and further optionally, 10≤m/q≤50. Exemplarily, m/q may be 5, 10, 20, 25, 28, 30, 32, 35, 40, 50, 80, 100, 200, 500,1000, or a range consisting of any two of the above values.

The separator may be made of a substrate, the liquid-retaining polymer and the like. Alternatively, the separator comes from a battery cell. The battery cell is disassembled, the separator soaked in an electrolyte solution in the battery cell is taken out, and the separator is washed with deionized water and then placed at 80°C for vacuum drying for 12 h to obtain the separator, which is used for separator testing.

The polymer system is left to stand at 70°C for 8 h, and after standing at 25°C for more than or equal to 24 h, after two stages of standing treatment, part of the polymer system is transformed into a gel-state substance through swelling and adsorption. The liquid-retaining polymer is in contact with an electrolyte solution, polymer molecular chains stretch and open, the electrolyte solution can diffuse between the molecular chains, the polymer molecular chains swell and adsorb, so as to construct and form a three-dimensional connection network between the separator and the electrolyte solution. The three-dimensional connection network can be attached to a surface of the electrode plate, to bond the separator and the electrode plate as a whole, thereby further improving stability of the electrode plate and a separator structure, and thus improving the cycle performance of the battery cell. Moreover, the three-dimensional connection network can lock the electrolyte solution in the three-dimensional connection network, so that the electrolyte solution can be maintained in the electrode plate and the diaphragm structure, which is beneficial to improving an ion transmission interface and the transmission of active ions such as lithium ions and sodium ions, and can further improve the cycle performance of the battery cell.

Exemplarily, based on mass of the polymer system, a ratio of a mass content of the liquid-retaining polymer to a mass content of the first solvent ranges from 1: 100 to 1:10, such as 3:50.

Exemplarily, the first solvent is the same as or similar to a solvent of the electrolyte solution, and the first solvent may include at least one of a carbonate solvent and an ether solvent. For example, the carbonate solvent includes a cyclic carbonate solvent and/or a linear carbonate solvent.

As examples of the cyclic carbonate solvent, the cyclic carbonate solvent includes one or more of ethylene carbonate (EC), vinylene carbonate (VC), fluoroethylene carbonate (FEC), difluoroethylene carbonate (DFEC), vinylethylene carbonate (VEC), and dioctyl dicaprylyl carbonate (CC).

As examples of the linear carbonate solvent, the linear carbonate solvent includes one or more of dimethyl carbonate (DMC), diethyl carbonate (DEC), ethyl methyl carbonate (EMC), diphenyl carbonate (DPC), methyl allyl carbonate (MAC), and polycarbonate (VA).

As examples of the ether solvent, the ether solvent includes one or more of tetrahydrofuran (THF), 2-methyltetrahydrofuran (2me-thf), 1,3-dioxolane (DOL), dimethoxymethane (DMM), 1,2-dimethoxyethane (DME), and diglyme (DG).

Optionally, the first solvent may further simultaneously contain a lithium salt and an electrolyte solution additive, such as lithium hexafluorophosphate, vinylene carbonate (VC), fluorovinylene carbonate (FEC), and the like.

In the present application, m/q is also referred to as a precipitation value, which characterizes a capability of the liquid-retaining polymer and the solvent to transform into a gel-state substance.

The first substance mainly includes a gel-state substance formed by the liquid-retaining polymer and the first solvent. In such gel-state substance, a molecular structure of the polymer will not change substantially.

In some embodiments, the first substance is dried at 80°C for 12 h to remove the first solvent in the first substance, and the first substance is mainly composed of the liquid-retaining polymer described above after drying, as determined by infrared spectrophotometry (IR) or tested by nuclear magnetic resonance (NMR).

The embodiments of the present application can achieve the stretching of the liquid-retaining polymer molecular chains within a safe operating temperature range of the battery cell by increasing the temperature, thereby promoting the mutual attraction and physical combination of the polymer molecular chains and the electrolyte solution. At a room temperature, activity of molecular chain segments of the liquid-retaining polymer is reduced, and the liquid-retaining polymer remains attached to the surface of the separator body and lock the electrolyte solution in a spatial environment where the liquid-retaining polymer is located, forming a gel or a gel-like state, which can increase a transmission rate of active ions such as lithium ions and improve the cycle performance.

In some embodiments, the bonding force of the separator is greater than or equal to 10 N/m; optionally, 10 N/m to 30 N/m. When the bonding force of the separator is within the above range, the separator has better bonding performance, which is beneficial to improving the connection stability between the separator and the electrode plate. During a charge and discharge cycle of the battery cell, a risk of an increased spacing between the separator and the electrode plate is reduced, thereby enabling an electrode assembly to adsorb more electrolyte solution, which is beneficial to improving the cycle performance. Exemplarily, the bonding force of the separator is 10 N/m, 12 N/m, 15 N/m, 16 N/m, 18 N/m, 20 N/m, 22 N/m, 25 N/m, 28 N/m, 30 N/m, or a range consisting of any two of the above values. The bonding force of the separator mainly refers to bonding force on a side having the polymer layer.

In the embodiment of the present application, the bonding force of the separator is tested using equipment and methods known in the art. For example, the positive electrode plate, the separator and the negative electrode plate are stacked in sequence to form a laminated electrode assembly, the electrode assembly is placed in a hot press machine, hot pressed at 80°C under a pressure of 8000 N for 120 s, and then placed in a high-speed rail tensile testing machine. The bonding force displayed in the high-speed rail tensile testing machine is the bonding force of the separator.

In some embodiments, the polymer layer may be formed by spraying a mixed system consisting of the liquid-retaining polymer and the solvent on the separator body, the solvent may include at least one of an aqueous solvent and an oily solvent, and the oily solvent may be understood as an organic solvent.

In a case where the solvent includes the aqueous solvent such as water, the bonding polymer may be added to the mixed system to improve a bonding capability of the polymer layer. In some embodiments, the bonding polymer includes one or more of epoxy resins, polyurethanes, organic silicons, polyimides, polyacrylates, polymethacrylates, and polyvinyl acetates (VAE emulsions). The above bonding polymer has a good bonding property. Optionally, the polyacrylates include ethyl acrylate.

In some embodiments, based on total mass of the polymer layer, a ratio of the mass percentage of the liquid-retaining polymer to the mass percentage of the bonding polymer is (1-9):1. When the ratio of the mass percentage of the liquid-retaining polymer to the mass percentage of the bonding polymer is within the above range, both the adhesiveness and a gel property of the polymer layer can be improved. Exemplarily, the ratio of the mass percentage of the liquid-retaining polymer to the mass percentage of the bonding polymer may be 1:1, 2:1, 3:1, 5:1, 6:1, 7:1, 8:1, 9:1 or a range consisting of any two of the above values.

A particle size of the liquid-retaining polymer may be smaller than a particle size of the bonding polymer. The polymer layer may be considered to be composed of large particles of bonding polymer with high adhesion and small particles of liquid-retaining polymer. The large particles agglomerate to form protrusions, and the polymer layer presents an island structure.

When the solvent includes the oily solvent such as N-methylpyrrolidone NMP and/or polyethersulfone, the polymer layer may include the oily solvent and the liquid-retaining polymer, and the liquid-retaining polymer can exert bonding performance, so that the separator has an excellent bonding property, and the formed polymer layer presents a network structure.

When the polymer layer is in contact with the electrolyte solution, the molecular chain segments of the liquid-retaining polymer are stretched, and the electrolyte solution is adsorbed in the chain segments, forming a three-dimensional cross-linked network structure with the electrode plate, and allowing active ions to be quickly transmitted at an interface between the electrolyte solution and the electrode plate. In addition, due to the introduction of the polymer with high adhesion into the three-dimensional cross-linked network structure, the separator and the electrode plate can be tightly bonded, thereby reducing the problem of the increase in the spacing between the electrode plate and the separator caused by the expansion of the electrode plate in the later stage of the cycle, so that the electrolyte solution can be continuously transmitted, the electrolyte solution can be transmitted along an initial state path, a risk of bridge breakage of the electrolyte solution caused by expansion during the cycle is reduced, and the electrode plate interface is not prone to having risks such as lithium deposition, thereby improving the cycle performance of the battery cell.

The polymer layer in the embodiment of the present application may be prepared by the following steps:
a liquid-retaining polymer and an optional bonding polymer are added into a solvent to be mixed into a mixed system; and
the mixed system is atomized and sprayed onto a surface of a separator body to form the polymer layer.

When performing atomized spraying using an aqueous solvent, the bonding polymer can provide excellent bonding capability to the separator, and the polymer layer may present an island structure.

When performing atomized spraying using an oily solvent, the liquid-retaining polymer has the certain bonding capability, the bonding polymer can further increase the bonding capability, and the polymer layer may present a network structure.

In some embodiments, a coating weight of the polymer layer ranges from 0.5 mg/1540.25 mm² to 5 mg/1540.25 mm².

When the coating weight is within the above range, a capability to form a gel-state substance with the electrolyte solution can be further improved, thereby increasing a liquid absorption rate. Optionally, the coating weight of the polymer layer of the separator ranges from 0.5 mg/1540.25 mm² to 3.5 mg/1540.25 mm².

Exemplarily, the coating weight of the polymer layer of the separator may be 0.5 mg/1540.25 mm², 0.8 mg/1540.25 mm², 1.0 mg/1540.25 mm², 1.2 mg/1540.25 mm², 1.3 mg/1540.25 mm², 1.5 mg/1540.25 mm², 2.0 mg/1540.25 mm², 2.2 mg/1540.25 mm², 2.5 mg/1540.25 mm², 3 mg/1540.25 mm², 3.5 mg/1540.25 mm², 4 mg/1540.25 mm², 4.5 mg/1540.25 mm², 5 mg/1540.25 mm² or a range consisting of any two of the above values.

In the embodiment of the present application, the coating weight refers to a coating weight of the polymer layer on one side of the separator, which can be detected by using equipment and methods known in the art. For example, by cutting the same mother roll substrate and separator into small discs of 1540.25 mm², and weighing 10 small discs of separator respectively, the coating weight of the polymer layer in the separator can be obtained by calculation.

In some embodiments, the liquid-retaining polymer may include one or more of a fluoropolymer, an ether polymer, an ester polymer, and a ketone-aldehyde polymer.

In some embodiments, the liquid-retaining polymer includes a fluoropolymer; crystallinity of the fluoropolymer measured by differential scanning calorimetry is X_{C1}, 0<X_{C1}≤30%; and the melting temperature of the fluoropolymer is Tₘ₁, a unit thereof is °C, and 0<Tₘ₁≤140.

Crystallization refers to the process in which atoms, ions or molecules in a material are arranged in a certain spatial order to form an orderly structure. The conformation of the polymer in the crystallization is determined by both intramolecular and intermolecular factors. The intermolecular force will affect a stacking density between the molecular chains. The crystallinity X_{C1} is used to characterize a degree of crystallinity in the material, which can be measured by differential scanning calorimetry (DSC). Specifically, the testing steps are: 0.5 g to 0.8 g of sample is taken, placed in a carrier crucible, and subjected to heating and cooling treatment under a nitrogen atmosphere, so that the sample is heated from an initial temperature 20°C lower than intrinsic T_{g1} of the material to a cutoff temperature 20°C higher than intrinsic Tₘ₁ of the material at a heating rate of 10°C/min, and an actual glass transition temperature T_{g1} and melting temperature Tₘ₁ of the material are determined according to an endothermic and exothermic peak value or transition point of the material in the process.

As a result, the fluoropolymer has the relatively low crystallinity and melting temperature, which makes the molecular chain arrangement tend to be loose, an interaction force between the molecular chains is small, adjacent molecular chains are easily opened, and the chain segment movement is achieved through intermolecular internal rotation, forming a molecular chain structure with high flexibility; and the fluoropolymer and the electrolyte solution in the battery cell can form a gel-state substance, thereby improving the cycle performance of the battery cell.

Exemplarily, the crystallinity X_{C1} of the fluoropolymer measured by the differential scanning calorimetry may be 5%, 10%, 15%, 20%, 25%, 30%, or a range consisting of any two of the above values.

Exemplarily, the melting temperature of the fluoropolymer may be 10°C, 20°C, 50°C, 70°C, 90°C, 100°C, 120°C, 140°C, or a range consisting of any two of the above values.

In some embodiments, the glass transition temperature of the fluoropolymer is T_{g1}, a unit thereof is °C, and -150≤T_{g1}≤60.

The glass transition temperature is a transition temperature of the polymer chain segments from freezing to movement. The glass transition temperature has a certain influence on the flexibility of the polymer molecular chains. The lower the glass transition temperature, the better the flexibility of the polymer molecular chains at room temperature. The higher the glass transition temperature, the worse the flexibility of the molecular chains at room temperature. The glass temperature may be measured by the differential scanning calorimetry (DSC). The glass transition temperature of the polymer is relatively low, the flexibility of the molecular chain segments is better, and adjacent molecular chains are easier to open. Exemplarily, the glass transition temperature of the fluoropolymer may be -150°C, -120°C, -100°C, -80°C, -60°C, -30°C, 0°C, 30°C, 60°C, or a range consisting of any two of the above values.

In some embodiments, the fluoropolymer includes at least one of a building block represented by formula (AI) to a building block represented by formula (AIII), 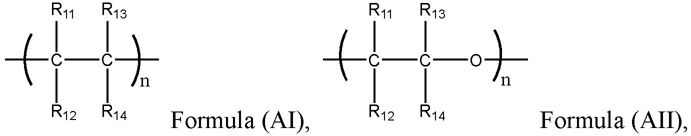 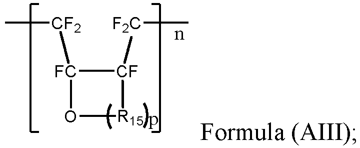 in formula (AI) and formula (AII), R₁₁, R₁₂, R₁₃ and R₁₄ each independently include a hydrogen atom, a fluorine atom, a bromine atom, substituted or unsubstituted C1-C3 alkyl, or substituted or unsubstituted C1-C3 alkoxy, and at least one of R₁₁, R₁₂, R₁₃ and R₁₄ contains a fluorine atom.

In formula (AIII), R₁₅ includes a single bond, and substituted or unsubstituted C1-C3 alkyl.

When the above groups are substituted, substituents may include one or more of a nitrile group (-CN), a nitro group, a sulfonic acid group, sulfonyl, amide, carboxyl, an ester group, and a halogen atom. The above substituents are high pressure resistant substituents and are more conducive to stabilizing the structure of the polymer. The halogen atom may include a fluorine atom, a chlorine atom, a bromine atom or the like. Optionally, the halogen atom includes a fluorine atom.

In the embodiment of the present application, the polymer may also be obtained by copolymerizing the above structural groups with a small amount of other types of structural groups (eg, olefin building blocks, ester monomers, nitrile monomers, amide monomers, and other building blocks).

In some embodiments, p is a positive integer selected from 1 to 3.

In some embodiments, n is a positive integer selected from 1000 to 30000.

In some embodiments, R₁₁, R₁₂, R₁₃ and R₁₄ each independently include a hydrogen atom, a fluorine atom, a bromine atom, substituted or unsubstituted C1-C2 alkyl, or substituted or unsubstituted C1-C2 alkoxy. Further optionally, R₁₁, R₁₂, R₁₃ and R₁₄each independently include a hydrogen atom, a fluorine atom, a chlorine atom, methyl, fluoromethyl, methoxy or perfluoromethoxy.

In some embodiments, the fluoropolymer includes at least one of a building block represented by formula (AI-1) to a building block represented by formula (AI-11),

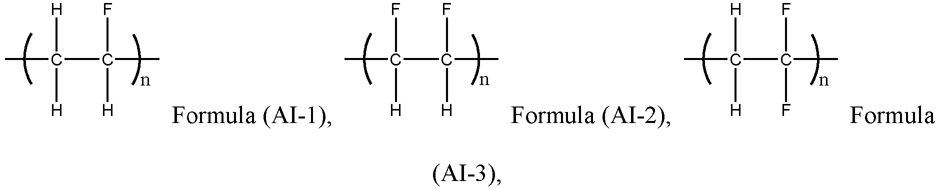

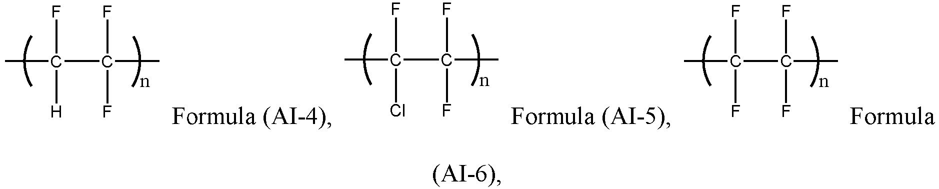

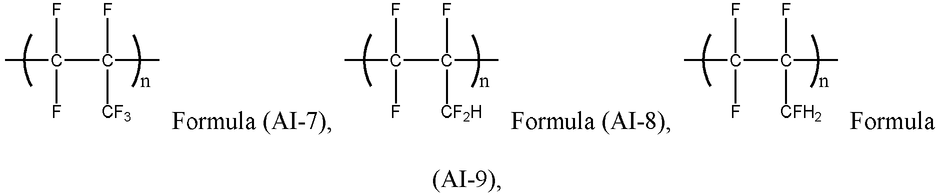

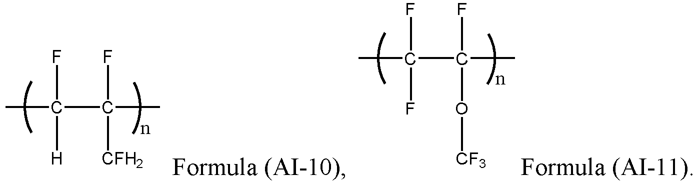

In some embodiments, the fluoropolymer includes at least one of a building block represented by formula (AII-1) to a building block represented by formula (AII-5),

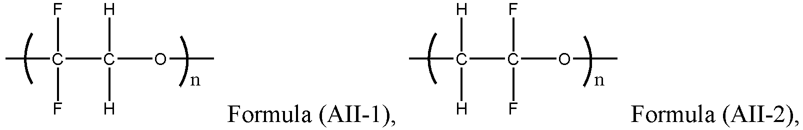

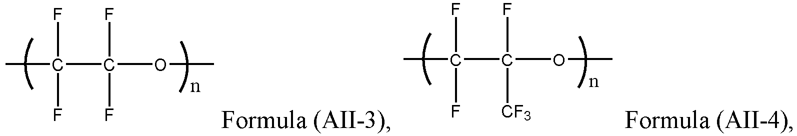

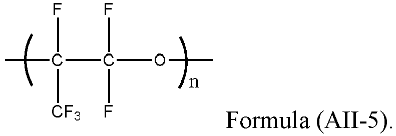

In some embodiments, the fluoropolymer includes at least one of a building block represented by formula (AIII-1) to a building block represented by formula (AIII-3),

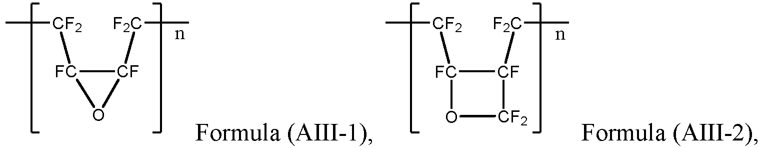

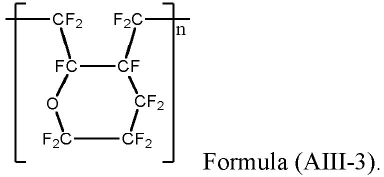

Exemplarily, the fluoropolymer includes one or more of polyperfluoroethylene (PTFE), polyvinylidene fluoride (PVDF), a perfluoroethylene propylene copolymer (FEP), a perfluoroalkoxy polymer (PFA), perfluoropolyether (PFPE), a polyvinylidene fluoride-hexafluoropropylene copolymer (PVDF-HFP), a polyvinylidene fluoride-trifluoroethylene copolymer (PVDF-TrFE) and perfluoro(1-butenyl vinyl ether) polymer (CYTOP for short).

Optionally, the fluoropolymer includes one or more of polyperfluoroethylene (PTFE), polyvinylidene fluoride (PVDF), a perfluoroethylene propylene copolymer (FEP), a polyvinylidene fluoride-hexafluoropropylene copolymer (PVDF-HFP), and a polyvinylidene fluoride-trifluoroethylene copolymer (PVDF-TrFE).

The fluoropolymer above may be derived from one or more of the following monomers: fluorocyclohexane, vinyl fluoride, 1,2-difluoroethylene, vinylidene fluoride, trifluoroethylene, chlorotrifluoroethylene, tetrafluoroethylene, hexafluoropropylene,3,3,3-trifluoropropylene, trifluoropropylene, tetrafluoropropylene, pentafluoropropylene, and the like. Optionally, the fluoropolymer above may be derived from at least two of the following monomers: fluorocyclohexane, vinyl fluoride, 1,2-difluoroethylene, vinylidene fluoride, trifluoroethylene, chlorotrifluoroethylene, tetrafluoroethylene, hexafluoropropylene,3,3,3-trifluoropropylene, trifluoropropylene, tetrafluoropropylene, pentafluoropropylene, and the like.

The monomers used in the above fluoropolymer are all short-chain monomers, which are conducive to polymerization to form a straight-chain linear structure or a short branched-chain structure. This type of structure has a low degree of entanglement, which is conducive to improving the flexibility of the molecular chains. The molecular chains can fully stretch in the electrolyte solution, which is conducive to the formation of a three-dimensional gel-state substance by the polymer and the electrolyte solution, and is conducive to further increase a solution absorption rate.

In some embodiments, n is a positive integer selected from 5000 to 20000.

In some embodiments, the molecular weight of the liquid-retaining polymer is in a range from 1.2×10⁵g/mol to 1.5×10⁶g/mol, optionally, 1.2×10⁵g/mol to 1.0×10⁶g/mol. When the molecular weight of the polymer is within the above range, it can ensure that the polymer exhibits a certain solubility in the electrolyte solution, while being difficult to be completely dissolved and dispersed by the electrolyte solution, which is beneficial to regulating the distribution and dispersion of the polymer; and it can further improve the flexibility between the molecular chains of the polymer, and the interaction force between the molecular chains is relatively weak, which is beneficial for solvent molecules in the electrolyte solution to open the molecular chains, enter between the molecular chains, and be wrapped by the molecular chains, thereby facilitating active ions to enter the active substance through the solvent, and realizing smooth and rapid migration of the active ions.

When the molecular weight of the liquid-retaining polymer is within the above range, it can ensure that the polymer exhibits a certain solubility in the electrolyte solution, while being difficult to be completely dissolved and dispersed by the electrolyte solution, which is beneficial to regulating the distribution and dispersion of the polymer on a surface of the active substance; and it can further improve the flexibility between the molecular chains of the polymer, and the interaction force between the molecular chains is relatively weak, which is beneficial for solvent molecules in the electrolyte solution to open the molecular chains, enter between the molecular chains, and be wrapped by the molecular chains, thereby facilitating active ions to enter the active substance through the solvent, and realizing smooth and rapid migration of the active ions. Exemplarily, the molecular weight of the polymer may be 1.2×10⁵g/mol, 2×10⁵g/mol, 5×10⁵g/mol, 8×10⁵g/mol, 1×10⁶g/mol, 1.5× 10⁶g/mol, or a range consisting of any two of the above values.

### [Ether polymer]

In some embodiments, the liquid-retaining polymer includes an ether polymer, and the ether polymer is made into a sheet-like structure; and the sheet-like structure obtains an elastic modulus G'-loss modulus G" curve through dynamic frequency scanning test at (Tₘ₂+20)°C, the slope of the elastic modulus G'-loss modulus G" curve is K₁, 1<K₁<∞, and Tₘ₂°C represents the melting temperature of the ether polymer.

Specifically, a preparation process of the sheet-like structure is as follows: the ether polymer is vacuum dried at 80°C for 12 h. The dried ether polymer is hot pressed into a thin sheet by a flat vulcanizer. A hot pressing temperature is set to be (Tₘ₂+20)°C, a calendering thickness is 1-2min, a calendering time is 2 min, and a pressure is 8 MPa. After calendering for 2 min, the sample is taken out and placed on another vulcanizer of the same model for cold pressing at a pressure of 10 MPa. A round die with a diameter of 25 mm may be used to obtain polymer discs (sheet structures) of a fixed size. For example, the sheet-like structure may be a disc with a thickness of 1-2 mm and a diameter of 25 mm; or the sample may be prepared according to a sample standard required by testing equipment.

According to the conclusions of classical linear viscoelasticity, for the polymer, especially the linear polymer, elastic modulus G'-loss modulus G" in a terminal region of an elastic modulus G'-loss modulus G" curve (an interval range approaching a maximum angular velocity) conforms to frequency dependence, and a longest chain of the polymer plays a role in the viscoelastic behavior.

The specific steps of the dynamic frequency scanning test are as follows: the dynamic frequency scanning test is performed using a TA-AR2000EX rotational rheometer (TAinstruments, USA), with a parallel plate having a diameter of 25 mm and a thickness of 0.9 mm. To ensure that the testing is conducted in a linear viscoelastic region, the strain during the dynamic frequency scanning test is 2%, the testing temperature is Tₘ₂+20°C, and a frequency sweep range of the testing is: 500rad/s≤w²≤0.05rad/s, so as to obtain data in the lowest possible frequency region.

The dynamic frequency scanning test can characterize a degree of entanglement of molecular chains under solid phase melting (melt state). Compared with a linear structure or a short branched structure, a long branched structure, a network structure and a low cross-linked structure which have a high degree of entanglement and shows a behavior of deviating from a linear terminal, the ether polymer shows a solid phase behavior. When the ether polymer of the present application meets the above range, an entanglement state of the molecular chains can be further reduced, which is beneficial to diffusion of solvent molecules in the electrolyte solution between the molecular chains; and the ether polymer still maintains a certain molecular chain entanglement state, and can form a gel-state substance with the electrolyte solution, thereby improving the cycle performance and storage performance of the battery cell.

In some embodiments, 1<K₁≤100; and optionally, 1<K₁≤10. Exemplarily, K₁ may be 1.01, 1.1, 2, 5, 10, 15, 20, 30, 50, 100, 200, 500, 1000, 5000, 10000, or a range consisting of any two of the above values.

In some embodiments, the glass transition temperature of the ether polymer is T_{g2}, a unit thereof is °C, and -100≤T_{g2}≤50; optionally, -80≤T_{g2}≤30. Exemplarily, the glass transition temperature of the ether polymer may be -100°C, -80°C, -60°C, -30°C, 0°C, 30°C, 50°C, or a range consisting of any two of the above values.

In some embodiments, the ether polymer includes a building block represented by formula (BI),

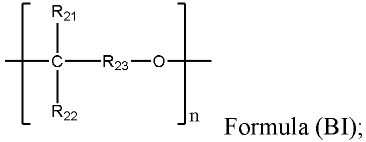

In formula (BI), R₂₁ and R₂₂ each independently include a hydrogen atom, substituted or unsubstituted C1-C3 alkyl, or substituted or unsubstituted C1-C3 alkoxy; and R₂₃ includes substituted or unsubstituted C1-C5 methylene.

In some embodiments, R₂₁ and R₂₂ each independently include a hydrogen atom, and substituted or unsubstituted C1-C2 alkyl.

In some embodiments, R₂₃ includes a single bond, and substituted or unsubstituted C1-C4 methylene.

Exemplarily, the ether polymer includes at least one of a building block represented by formula (BI-1) to a building block represented by formula (BI-8),

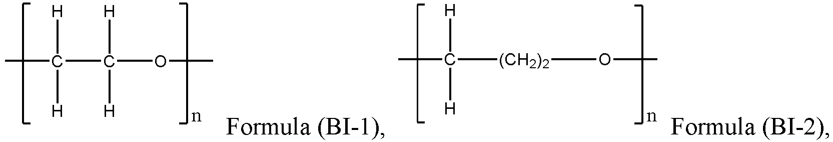

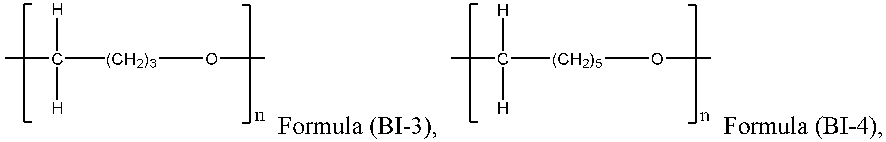

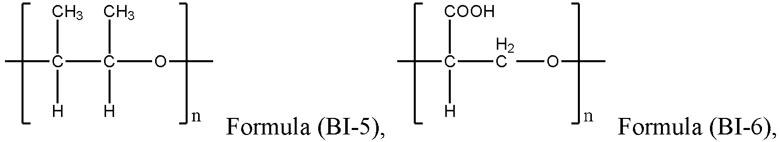

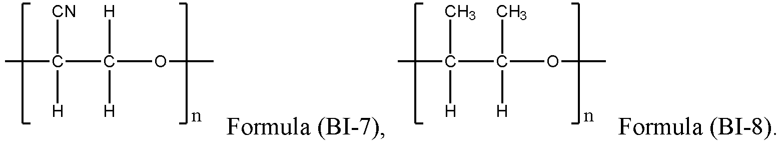

In some embodiments, the ether polymer includes a building block represented by formula (BII), 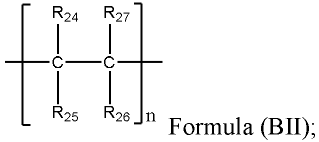 in formula (BII), R₂₄ to R₂₇ each independently include a hydrogen atom, substituted or unsubstituted C1-C3 alkyl, substituted or unsubstituted C1-C3 alkoxy or an ether group, and at least one of R₂₄ to R₂₇ includes substituted or unsubstituted C1-C3 alkoxy or an ether group.

In some embodiments, R₂₄ to R₂₇ each independently include a hydrogen atom, substituted or unsubstituted C1-C2 alkyl, substituted or unsubstituted C1-C2 alkoxy or an ether group, and at least one of R₂₄ to R₂₇ includes substituted or unsubstituted C1-C2 alkoxy or an ether group.

In some embodiments, the ether polymer includes at least one of a building block represented by formula (BII-1) to a building block represented by formula (BII-7),

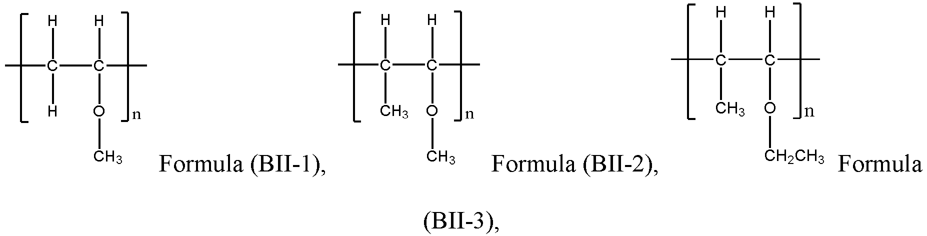

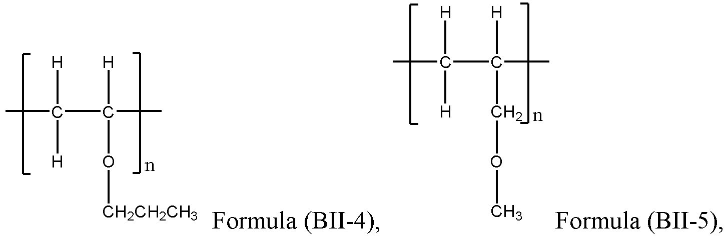

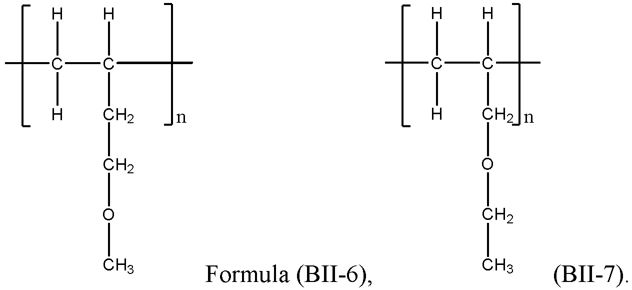

The monomers used in the above ether polymer are multi-membered rings, such as a structure below a six-membered ring or short chain monomers, which is conducive to polymerization to form a high content of -O- structure. This type of structure has a low degree of entanglement, which is conducive to improving the flexibility of the molecular chains. The molecular chains can be fully stretched in the electrolyte solution, and is easy to form the gel-state substance with the electrolyte solution, thereby improving the cycle performance and storage performance of the battery cell.

The above polymer is only an example of structural groups of the main molecular chains. In the embodiment of the present application, the polymer may also be obtained by copolymerizing the above structural groups with a small amount of other types of structural groups (eg, olefin building blocks, ester monomers, nitrile monomers, amide monomers, and other building blocks).

When the above groups are substituted, substituents may include one or more of a nitrile group (-CN), a nitro group, a sulfonic acid group, sulfonyl, amide, carboxyl, an ester group, and a halogen atom. The above substituents are high pressure resistant substituents and are more conducive to stabilizing the structure of the polymer. The halogen atom may include a fluorine atom, a chlorine atom, a bromine atom or the like.

In some embodiments, n is a positive integer selected from 1500 to 25000.

Optionally, n is a positive integer selected from 3000 to 18000.

In some embodiments, the molecular weight of the polymer is in a range from 1.2×10⁵g/mol to 1.0×10⁶g/mol.

Exemplarily, the molecular weight of the polymer may be 1.2×10⁵g/mol, 2×10⁵g/mol, 5×10⁵g/mol, 8×10⁵g/mol, 1×10⁶g/mol, or a range consisting of any two of the above values.

### [Ester polymer]

In some embodiments, the liquid-retaining polymer includes an ester polymer, wherein the ester polymer is made into a sheet-like structure; and the sheet-like structure obtains an elastic modulus G'-loss modulus G" curve through dynamic frequency scanning test at (Tₘ₃+20)°C, the slope of the elastic modulus G'-loss modulus G" curve is K₂, 1<K₂<∞, and Tₘ₃°C represents the melting temperature of the ester polymer.

When the ester polymer of the embodiment of the present application meets the above range, an entanglement state of the molecular chains can be further reduced, which is beneficial to diffusion of solvent molecules in the electrolyte solution between the molecular chains; and the ether polymer still maintains a certain molecular chain entanglement state, and can form a gel-state substance with the electrolyte solution, which can increase a rate of liquid absorption, thereby improving the cycle performance and storage performance of the battery cell.

In some embodiments, 1<K₂≤100; and optionally, 1<K₂≤10.

Exemplarily, K₂ may be 1.01, 1.1, 1.2, 1.5, 2, 5, 10, 15, 20, 30, 50, 100, 200, 500, 1000, 5000, 10000, or a range consisting of any two of the above values.

In some embodiments, the glass transition temperature of the ester polymer is T_{g3}, a unit thereof is °C, and -100≤T_{g3}≤50; optionally, -80≤T_{g3}≤30.

Exemplarily, the glass transition temperature of the ester polymer may be -100°C, - 90°C, -80°C, -60°C, -30°C, 0°C, 30°C, 50°C, or a range consisting of any two of the above values.

In some embodiments, the ester polymer includes a building block represented by formula (CI), 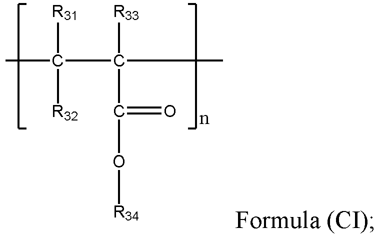 in formula (CI), R₃₁, R₃₂ and R₃₃ each independently include a hydrogen atom or substituted or unsubstituted C1-C8 alkyl; R₃₄ includes substituted or unsubstituted C1-C8 alkyl, or substituted or unsubstituted C1-C8 hydroxyalkyl; optionally, R₃₄ includes substituted or unsubstituted C1-C6 alkyl, or substituted or unsubstituted C1-C6 hydroxyalkyl.

Optionally, R₃₁ includes a hydrogen atom, or substituted or unsubstituted methyl.

Optionally, R₃₂ and R₃₃ each independently include a hydrogen atom.

Optionally, R₃₄ includes substituted or unsubstituted C1-C4 alkyl, or substituted or unsubstituted C1-C4 hydroxyalkyl.

Exemplarily, the ester polymer includes at least one of a building block represented by formula (CI-1) to a building block represented by formula (CI-15),

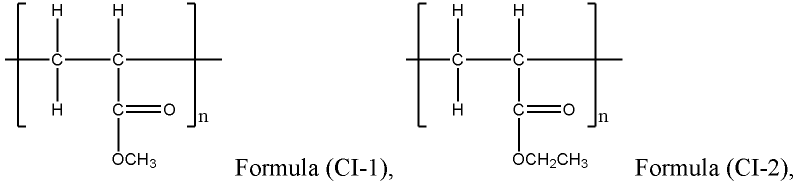

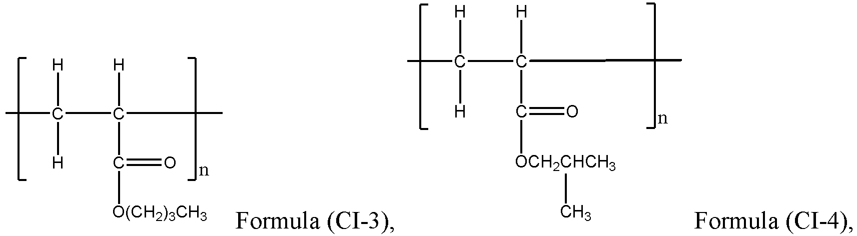

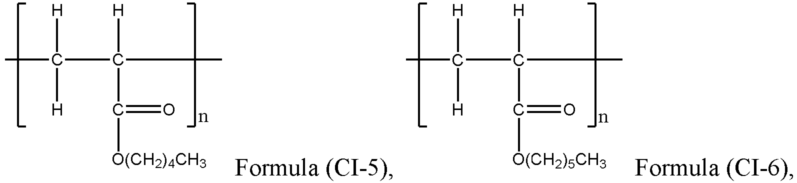

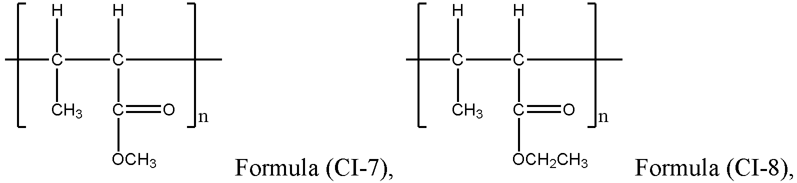

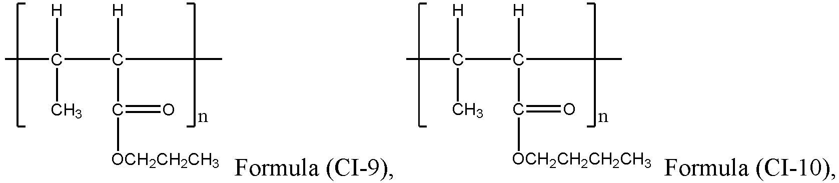

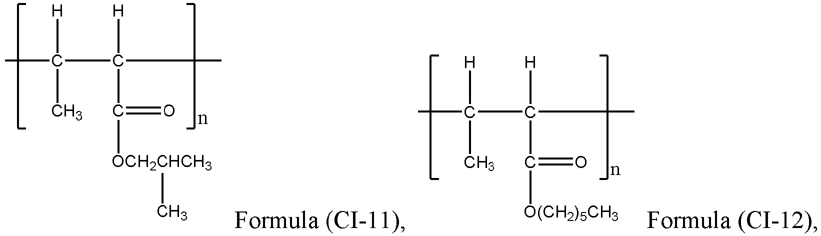

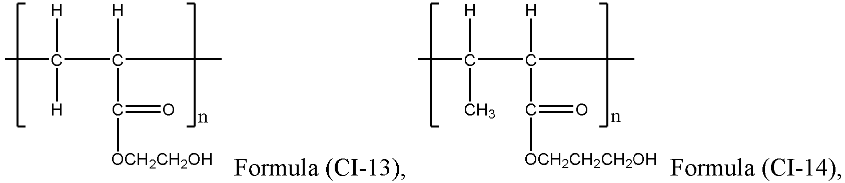

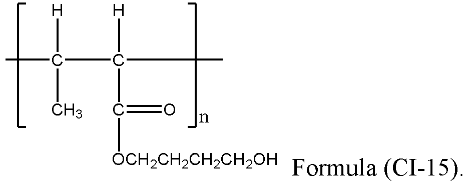

In some embodiments, the ester polymer includes a building block represented by formula (CII), 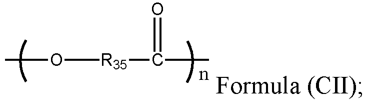 in formula (CII), R₃₅ includes substituted or unsubstituted C2-C6 methylene.

Optionally, R₃₅ each independently includes substituted or unsubstituted C2-C4 methylene.

Exemplarily, the ester polymer includes at least one of a building block represented by formula (CII-1) to a building block represented by formula (CII-5),

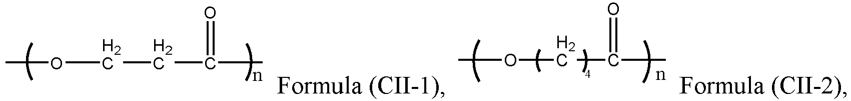

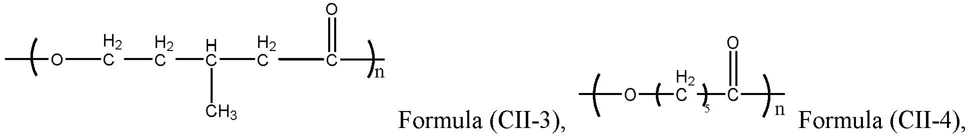

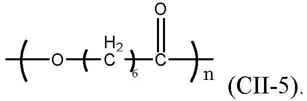

The molecular chains of the above ester polymer have a low degree of entanglement, which is beneficial to improving the flexibility of the molecular chains. The molecular chains can be fully stretched in the electrolyte solution, and is easy to form the gel-state substance with the electrolyte solution.

The above polymer is only an example of structural groups of the main molecular chains. In the embodiment of the present application, the polymer may also be obtained by copolymerizing the above structural groups with other types of structural groups (such as an olefin building block, an acrylonitrile building block, maleic anhydride and other monomers with functional groups).

When the above groups are substituted, the substituents may include one or more of a nitrile group, a nitro group, sulfonyl, carboxyl, an ester group, a chlorine atom, a fluorine atom, or a bromine atom. The above substituents are high pressure resistant substituents and are more conducive to stabilizing the structure of the polymer.

In some embodiments, n is a positive integer selected from 800 to 20000.

Optionally, n is a positive integer selected from 1000 to 15000.

In some embodiments, the molecular weight of the polymer is in a range from 1.2×10⁵g/mol to 1.0×10⁶g/mol.

Exemplarily, the molecular weight of the polymer may be 1.2×10⁵g/mol, 2×10⁵g/mol, 5×10⁵g/mol, 8×10⁵g/mol, 1×10⁶g/mol, 1.5× 10⁶g/mol, or a range consisting of any two of the above values.

### [Ketone-aldehyde polymer]

In some embodiments, the liquid-retaining polymer includes an aldehyde-ketone polymer, wherein the aldehyde-ketone polymer is made into a sheet-like structure; and the sheet-like structure obtains an elastic modulus G'-loss modulus G" curve through dynamic frequency scanning test at (Tₘ₄+20)°C, the slope of the elastic modulus G'-loss modulus G" curve is K₃, 0.8≤K₃<∞, and Tₘ₄°C represents the melting temperature of the aldehyde-ketone polymer.

In some embodiments, 0.8≤K₃≤100; and optionally, 0.8≤K₃≤10.

Exemplarily, K₃ may be 0.8, 0.9, 1, 2, 5, 10, 15, 20, 30, 50, 100, 200, 500, 1000, 5000, 10000, or a range consisting of any two of the above values.

In some embodiments, the glass transition temperature of the aldehyde-ketone polymer is T_{g4}, a unit thereof is °C, and -100≤T_{g4}≤50; optionally, -80≤T_{g4}≤30.

Exemplarily, the glass transition temperature of the aldehyde-ketone polymer may be -100°C, -90°C, -80°C, -60°C, -30°C, 0°C, 30°C, 50°C, or a range consisting of any two of the above values.

In some embodiments, the aldehyde-ketone polymer includes a building block represented by formula (DI), 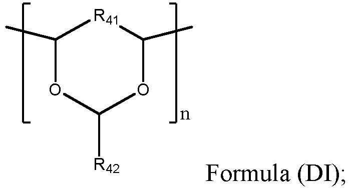
in formula (DI), R₄₁ includes a single bond, and substituted or unsubstituted C1-C6 methylene; and R₄₂ includes a hydrogen atom, and substituted or unsubstituted C1-C6 alkyl;
optionally, R₄₁ includes a single bond, and substituted or unsubstituted C1-C2 methylene;
optionally, R₄₂ includes a hydrogen atom, and substituted or unsubstituted C1-C3 alkyl.

In the embodiment of the present application, the single bond indicates that the group does not exist, and the atoms on both sides of the group are connected by a single bond. For example, R₄₁ is a single bond, which indicates that carbon atoms on both sides of R₄₁ are connected by a single bond.

In some embodiments, the aldehyde-ketone polymer includes at least one of a building block represented by formula (DI-1) to a building block represented by formula (DI-6),

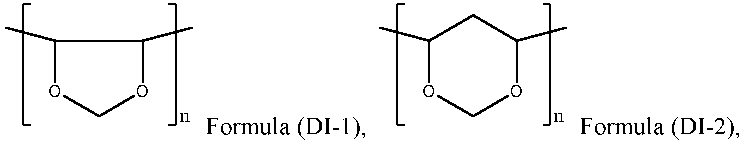

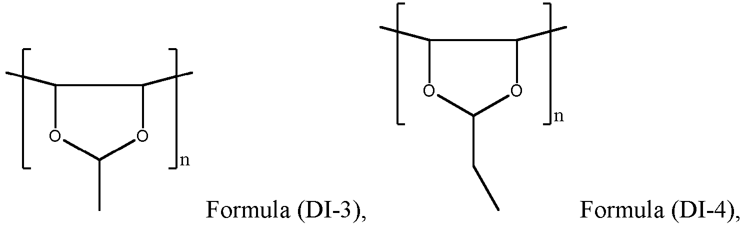

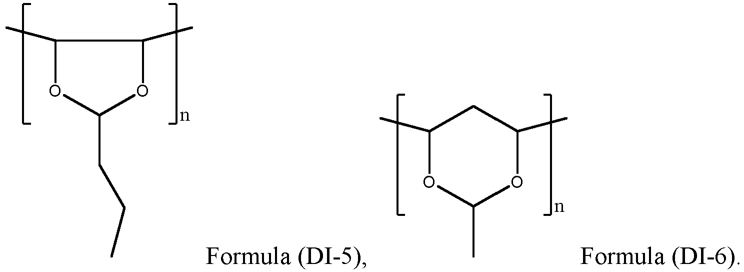

Exemplarily, the aldehyde-ketone polymer includes a building block represented by formula (DII), 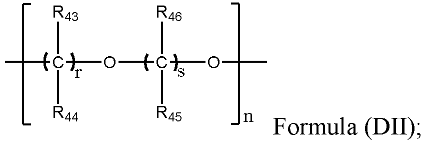 in formula (DII), R₄₃ to R₄₆ each independently include a hydrogen atom, hydroxyl, substituted or unsubstituted C1-C3 alkyl, substituted or unsubstituted C1-C3 hydroxyalkyl, or substituted or unsubstituted C1-C3 alkoxy; and r and s are each independently selected from integers in a range from 0 to 5, and at least one of r and s is selected from a positive integer. Optionally, R₄₃ to R₄₆ each independently include a hydrogen atom, hydroxyl, substituted or unsubstituted C1-C3 alkyl, substituted or unsubstituted C1-C2 hydroxyalkyl, or substituted or unsubstituted C1-C2 alkoxy.

In some embodiments, the aldehyde-ketone polymer includes at least one of a building block represented by formula (DII-1) to a building block represented by formula (DII-4),

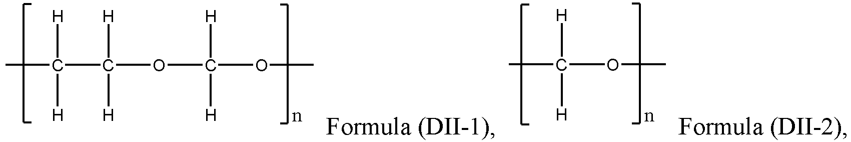

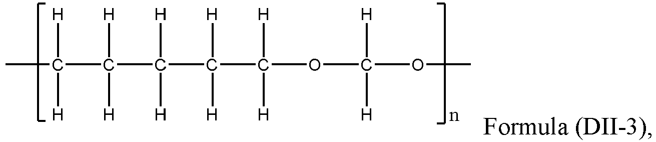

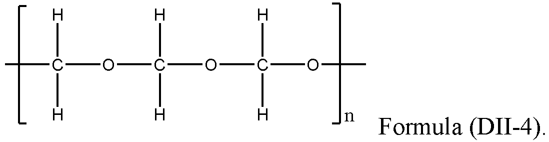

The molecular chains of the above aldehyde-ketone polymer have a low degree of entanglement, which is beneficial to improving the flexibility of the molecular chains. The molecular chains can be fully stretched in the electrolyte solution, which is conducive to forming the gel-state substance with the electrolyte solution.

The above polymer is only an example of structural groups of the main molecular chains. In the embodiment of the present application, the polymer may also be obtained by copolymerizing the above structural groups with other types of structural groups (such as an olefin building block, an enol building block, and an acrylonitrile building block).

When the above groups are substituted, the substituents may include one or more of a nitrile group (-CN), a nitro group, sulfonyl, carboxyl, an ester group, a chlorine atom, a fluorine atom, or a bromine atom. The above substituents are high pressure resistant substituents and are more conducive to stabilizing the structure of the polymer.

In some embodiments, n is a positive integer selected from 500 to 15000.

Optionally, n is a positive integer selected from 500 to 10000.

In some embodiments, the molecular weight of the polymer is in a range from 1.2×10⁵g/mol to 1.0×10⁶g/mol.

Exemplarily, the molecular weight of the polymer may be 1.2×10⁵g/mol, 2×10⁵g/mol, 5×10⁵g/mol, 8×10⁵g/mol, 1×10⁶g/mol, 1.0× 10⁶g/mol, or a range consisting of any two of the above values.

The relevant parameters of the liquid-retaining polymer in the embodiment of the present application can be detected by the following method:
the groups of the liquid-retaining polymer in the embodiment of the present application can be detected by infrared spectrophotometry (IR). Specifically, the liquid-retaining polymer is tested by a Thermo Nicolet Nexus 670 attenuated total-reflection Fourier transform infrared spectrometer (FTIR-ATR), and then tested with reference to the standard GB/T6040-2002. The test range is: ATR method 600-4000 cm⁻¹; repeatability is: ±2cm⁻¹; resolution is: better than 4 cm⁻¹; and a transmission depth is 0.2-0.6µm.

The structure of the liquid-retaining polymer in the embodiment of the present application can be tested by nuclear magnetic resonance (NMR). Specifically, 1H NMR and 13C NMR are performed on a Varian Mercury Plus-400 nuclear magnetic resonance instrument, the test temperature is 20°C, TMS is used as the internal standard, CDCl₃ is used as a solvent, and a proton resonance frequency is 400 MHz.

The polymer monomer type (especially suitable for monomers that account for a relatively small proportion in the polymer) of the liquid-retaining polymer of the embodiment of the present application can be tested by pyrolysis-gas chromatography-mass spectrometry, and the specific test steps are as follows: 0.5 mg of sample is accurately weighed and put into a sample cup, the sample cup is fixed to a sample injection rod, and then put into a pyrolyzer installed near a gas chromatography (GC) sample injection port. After the temperature of the pyrolyzer reaches a set temperature, a sample injection button is pressed, and the sample cup quickly falls into a core of a pyrolysis furnace by free fall. In an inert gas N₂ atmosphere, volatile components are instantly vaporized and carried into a gas chromatography column by carrier gas for separation. Finally, the volatile components are detected by a flame ionization detector (FID) or a mass spectrometer (MS) to obtain a gas chromatogram or a total ion flow diagram.

The molecular weight of the liquid-retaining polymer in the embodiment of the present application has a well-known meaning in the art, and can be measured using equipment and methods commonly used in the art. The molecular weight can be tested using gel permeation chromatography (GPC). The specific testing steps are: an appropriate amount of sample to be tested (the sample concentration is sufficient to ensure 8%-12% shading) is taken, 20 ml of deionized water is added, meanwhile, ultrasound is performed for 5 minutes (53KHz/120W) to ensure that the sample is completely dispersed, and then the sample is measured according to GB/T19077-2016/ISO 13320:2009 standard.

Alternatively, the molecular weight is tested using a multi-angle laser light scatterometer (MALLS), specifically, an instrument in which a GPC is combined with a Dawn Heleos II multi-angle laser light scattering device, an Optilab T-rEX refractive index (RI) detector and a Visco Star II viscometer (Wyatt Technology Corporation, USA) is used. The test is conducted at 30°, tetrahydrofuran is used as a mobile phase, and testing is conducted at a flow rate of 1.0 ml/min, and commercial software ASTRA6 is used to process SEC-SAMLL data to obtain molecular weight parameters.

In the embodiment of the present application, the separator includes a separator body and a polymer layer, and the polymer layer is disposed on at least one surface of the separator body, which means that the polymer layer may be disposed on one surface of the separator body or on both surfaces of the separator body. Since the separator body has various structural forms, the polymer layer has various disposing forms accordingly. The liquid-retaining polymer may be dispersed in a solvent to form a polymer mixed system, and the polymer mixed system is coated on the separator body through a coating process such as atomized spraying and gravure coating.

In some embodiments, the separator body includes a substrate, and the polymer layer is disposed on at least one surface of the substrate.

In some other embodiments, the separator body includes a substrate and a heat-resistant coating, the heat-resistant coating is disposed on at least one surface of the substrate, and the polymer layer is disposed on a surface of the heat-resistant coating facing away from the substrate. It can be understood that the heat-resistant coating may be disposed on one surface of the substrate, or on both surfaces of the substrate.

The embodiment of the present application has no particular restrictions on a material of the substrate, and any known substrate with good chemical stability and mechanical stability can be selected. For example, the substrate may include at least one of a porous polyolefin-based resin film (such as at least one of polyethylene, polypropylene, and polyvinylidene fluoride), a porous glass fiber, and a porous non-woven fabric. The substrate may be a single-layer film or a multi-layer composite film. When the substrate is the multi-layer composite film, materials of the layers may be the same or different.

In some embodiments, the porosity of the substrate is greater than or equal to 25%; optionally, 25% to 50%. When the porosity of the substrate is within the above range, air permeability of the substrate can be improved, which is beneficial to migration of active ions. Moreover, since the porosity is relatively small, the mechanical performance of the substrate can further be improved, and a good support effect can be provided for the polymer layer.

In some embodiments, a thickness of the substrate may be less than or equal to 16 µm, and optionally, 5 µm to 12 µm. Exemplarily, the thickness of the substrate may be 1 µm, 2 µm, 3 µm, 5 µm, 10 µm, 12 µm, 15 µm, 16 µm, or a range consisting of any two of the above values.

The heat-resistant coating may include heat-resistant particles. In some embodiments, the heat-resistant particles include at least one of inorganic particles and organic particles. By adding the heat-resistant particles, heat resistance of the separator can be improved.

In some embodiments, the mass percentage of the inorganic particles in the heat-resistant coating is ≤30. Exemplarily, the mass percentage of the inorganic particles in the heat-resistant coating may be 1%, 2%, 3%, 4%, 5%, 6%, 7%, 8%, 9%, 10%, 15%, 20%, 25%, 30%, or a range consisting of any two of the above values.

Optionally, the inorganic particles may include at least one of inorganic particles having a dielectric constant of 5 or more, inorganic particles having a capability to transport active ions, and inorganic particles capable of undergoing electrochemical oxidation and reduction.

In some embodiments, the inorganic particles having the dielectric constant of 5 or more may include at least one of boehmite (γ-AlOOH), aluminum oxide (Al₂O₃), barium sulfate (BaSO₄), magnesium oxide (MgO), magnesium hydroxide (Mg(OH)₂), silicon oxide SiOₓ(0<x≤2), tin dioxide (SnO₂), titanium oxide (TiO₂), calcium oxide (CaO), zinc oxide (ZnO), zirconium oxide (ZrO₂), yttrium oxide (Y₂O₃), nickel oxide (NiO), hafnium dioxide (HfO₂), cerium oxide (CeO₂), zirconium titanate (ZrTiO₃), barium titanate (BaTiO₃), magnesium fluoride (MgF₂), Pb(Zr,Ti)O₃(abbreviated as PZT), Pb₁₋ₘLaₘZr₁₋ₙTiₙO₃(abbreviated as PLZT, 0<m<1, 0<n<1) and Pb(Mg₃Nb_{2/3})O₃-PbTiO₃(abbreviated as PMN-PT).

In some embodiments, the inorganic particles having the capability to transport the active ions may include at least one of lithium phosphate (Li₃PO₄), lithium titanium phosphate (LiₓTi_{y}(PO₄)₃, 0<x<2, 0<y<3), lithium aluminum titanium phosphate (LiₓAl_{y}Ti_{z}(PO₄)₃, 0<x<2, 0<y<1, 0<z<3), (LiAlTiP)ₓO_{y} type glass (0<x<4, 0<y<13), lithium lanthanum titanate (LiₓLa_{y}TiO₃, 0<x<2, 0<y<3), lithium germanium thiophosphate (LiₓGe_{y}P_{z}S_{w}, 0<x<4, 0<y<1, 0<z<1, 0<w<5), lithium nitride (LiₓN_{y}, 0<x<4, 0<y<2), SiS₂ type glass (LiₓSi_{y}S_{z}, 0<x<3, 0<y<2, 0<z<4) and P₂S₅type glass (LiₓP_{y}S_{z}, 0<x<3, 0<y<3, 0<z<7).

In some embodiments, the inorganic particles capable of undergoing the electrochemical oxidation and reduction may include at least one of a lithium-containing transition metal oxide, lithium-containing phosphate of an olivine structure, a carbon-based material, a silicon-based material, a tin-based material, and a lithium-titanium compound.

In some embodiments, the heat-resistant coating may also include other organic particles, for example, the organic particles may include at least one of polystyrene, polyethylene, polyimide, melamine resin, phenolic resin, polypropylene, polyester (e.g., polyethylene terephthalate, polyethylene naphthalate, polybutylene terephthalate), polyphenylene sulfide, polyaramid, polyamideimide, polyimide, a copolymer of butyl acrylate and ethyl methacrylate, and a mixture thereof.

In some embodiments, the heat-resistant coating may further include a binder. As an example, the binder may include at least one of aqueous solution type acrylic resin (eg, a homopolymer of acrylic acid, methacrylic acid, sodium acrylate monomer or a copolymer with other comonomers), polyvinyl alcohol (PVA), an isobutylene-maleic anhydride copolymer and polyacrylamide.

In some embodiments, a thickness of the heat-resistant coating may be less than or equal to 4 µm. Therefore, an energy density of the battery cell is improved. In the embodiment of the present application, the thickness of the heat-resistant coating refers to a thickness of the heat-resistant coating on one side of the substrate. Exemplarily, the thickness of the heat-resistant coating may be 0.1 µm, 0.5 µm, 1 µm, 1.5 µm, 2 µm, 2.5 µm, 3 µm, 3.5 µm, 4 µm, or a range consisting of any two of the above values.

In some embodiments, the polymer layer may further include heat-resistant particles. A synergistic effect of the heat-resistant particles and the liquid-retaining polymer can further improve overall heat resistance and ion transmission performance of the separator. The liquid-retaining polymer and the heat-resistant particles may be dispersed in a solvent to form a polymer mixed system, and the polymer mixed system is coated on the separator body through a coating process such as atomized spraying and gravure coating.

In some embodiments, a thickness of the polymer layer may be in a range from 0.5 µm to 3.0 µm, and optionally, from 1.0 µm to 2.0 µm. When the thickness of the polymer layer is within the above range, the overall heat resistance and ion transmission performance of the separator can further be improved. Exemplarily, the thickness of the polymer layer may be 0.5 µm, 0.8 µm, 1.0 µm, 1.2 µm, 1.5 µm, 1.8 µm, 2.0 µm, 2.3 µm, 2.5 µm, 2.8 µm, 3.0µm, or a range consisting of any two of the above values.

### Battery cell

In a second aspect, an embodiment of the present application provides a battery cell, the battery cell includes an electrode assembly and an electrolyte, the electrode assembly includes a positive electrode plate, a negative electrode plate and a separator, the separator is disposed between the positive electrode plate and the negative electrode plate, and the separator includes the separator as described in any embodiment of the first aspect of the present application.

### [Positive electrode plate]

The positive electrode plate includes a positive electrode current collector and a positive electrode active material layer disposed on at least one surface of the positive electrode current collector.

As an example, the positive electrode current collector has two surfaces opposite in its own thickness direction, and the positive electrode active material layer is disposed on either one or both of the two opposite surfaces of the positive electrode current collector.

The positive electrode active material layer includes a positive electrode active material, and the positive electrode active material may be a positive electrode active material for a battery cell known in the art. As an example, the positive electrode active material may include at least one of the following materials: a lithium-containing phosphate compound, a lithium-containing transition metal oxide, a sodium-containing phosphate compound, and a sodium-containing transition metal oxide.

Exemplarily, a general formula of the olivine-type phosphate active material (the lithium-containing phosphate compound) is:LiₓA_{y}MeₐM_{b}P_{1-c}X_{c}Y_{z}, wherein 0≤x≤1.3, 0≤y≤1.3, and 0.9≤x+y≤1.3; 0.9≤a≤1.5, 0≤b≤0.5, and 0.9≤a+b≤1.5; 0≤c≤0.5; 3≤z≤5; A includes one or more of Na, K, and Mg; Me includes one or more of Mn, Fe, Co, and Ni; M includes one or more of B, Mg, Al, Si, P, S, Ca, Sc, Ti, V, Cr, Cu, Zn, Sr, Y, Zr, Nb, Mo, Cd, Sn, Sb, Te, Ba, Ta, W, Yb, La, and Ce; X includes one or more of S, Si, Cl, B, C, and N; and Y includes one or more of O and F. Specifically, the olivine-type phosphate active material includes one or more of LiFePO₄, LiMnPO₄, LiNiPO₄, and LiCoPO₄.

Exemplarily, thelithium transition metal oxide (layered materials such as ternary, lithium/sodium nickel oxide, lithium/sodium cobalt oxide, lithium/sodium manganese oxide, lithium-rich layered and rock salt phase layered materials). A general formula for the layered-structure positive electrode active material is: LiₓA_{y}NiₐCo_{b}Mn_{c}M_{(1-a-b-c)}Y_{z}, wherein 0≤x≤2.1, 0≤y≤2.1, and 0.9≤x+y≤2.1; 0≤a ≤1, 0≤b≤1, 0≤c≤ 1, and 0.1≤a+b+c≤ 1; 1.8≤z≤3.5 ; A includes one or more of Na, K, Mg; M includes one oe more of B, Mg, Al, Si, P, S, Ca, Sc, Ti, V, Cr, Fe, Cu, Zn, Sr, Y, Zr, Nb, Mo, Cd, Sn, Sb, Te, Ba, Ta, W, Yb, La, and Ce; and Y includes one or more of O and F. Optionally, y=0. Specifically, the positive electrode active material of the layered structure may include one or more of lithium cobalt oxide (LCO), lithium nickel oxide (LNO), lithium manganese oxide LMO, LiNi_{1/3}Co_{1/3}Mn_{1/3}O₂(NCM333), LiNi_{0.5}Co_{0.2}Mn_{0.3}O₂(NCM523), LiNi_{0.6}Co_{0.2}Mn_{o.2}O₂(NCM622), LiNi_{0.8}Co_{0.1}Mn_{0.1}O₂(NCM811) and NCA.

In some embodiments, the positive electrode current collector may be a metal foil or a composite current collector. As an example of the metal foil, an aluminum foil or an aluminum alloy foil may be used. The composite current collector may include a high molecular material substrate layer and a metal material layer formed on at least one surface of the high molecular material substrate layer. As an example, the metal material may include a combination selected from one or more of aluminum, an aluminum alloy, nickel, a nickel alloy, titanium, a titanium alloy, silver, and silver alloy. The high molecular material substrate layer may include a combination selected from one or more of polypropylene (PP), polyethylene terephthalate (PET), polybutylene terephthalate (PBT), polystyrene (PS), and polyethylene (PE).

In some embodiments, the positive electrode active material layer further optionally includes a positive electrode conductive agent. In the embodiment of the present application, the type of the positive electrode conductive agent is not specifically limited. As an example, the positive electrode conductive agent includes a combination selected from one or more of superconducting carbon, conductive carbon black, conductive graphite, acetylene black, carbon black, Ketjen black, carbon dots, carbon nanotubes, graphene, and carbon nanofibers. In some embodiments, based on total mass of the positive electrode active material layer, the mass percentage of the positive electrode conductive agent is less than 5%.

In some embodiments, the positive electrode active material layer further optionally includes a positive electrode binder. In the embodiment of the present application, the type of the positive electrode binder is not specifically limited. As an example, the positive electrode binder may include a combination selected from one or more of polyvinylidene fluoride (PVDF), polytetrafluoroethylene (PTFE), a vinylidene fluoride-tetrafluoroethylene-propylene terpolymer, a vinylidene fluoride-hexafluoropropylene-tetrafluoroethylene terpolymer, a tetrafluoroethylene-hexafluoropropylene copolymer, and a fluorinated acrylate resin. In some embodiments, based on total mass of the positive electrode active material layer, the mass percentage of the positive electrode binder is less than 5%. Compared with crystallinity of the fluoropolymer according to the embodiment of the present application, crystallinity of the positive electrode binder is higher. Compared with the melting temperature of the fluoropolymer according to the embodiment of the present application, the melting temperature of the positive electrode binder is higher.

The positive electrode active material layer is usually formed by coating a positive electrode slurry on the positive electrode current collector, followed by drying and cold pressing. The positive electrode slurry is generally formed by dispersing the positive electrode active material, the optional conductive agent, the optional binder and any other components in a solvent and sufficiently stirring the mixture. The solvent may be N-methyl pyrrolidone (NMP), but is not limited thereto. Of course, the preparation of the positive electrode plate is not limited to the above method, and the preparation method described above can also be used.

### [Negative electrode plate]

In some embodiments, the negative electrode plate includes a negative electrode current collector and a negative electrode active material layer disposed on at least one surface of the negative electrode current collector and including a negative electrode active material.

Exemplarily, the negative electrode current collector has two surfaces opposite in its own thickness direction, and the negative electrode active material layer is disposed on either one or both of the two opposite surfaces of the negative electrode current collector.

The negative electrode active material may be a negative electrode active material for a battery cell known in the art. As an example, the negative electrode active material may include, but not limited to, at least one of natural graphite, artificial graphite, soft carbon, hard carbon, a silicon-based material, a tin-based material, and lithium titanium oxide. The silicon-based material may include at least one of elemental silicon, a silicon oxide, a silicon-carbon composite, a silicon-nitrogen composite, and a silicon alloy material. The tin-based material may include at least one of elemental tin, a tin oxide, and a tin alloy material.

In some embodiments, the negative electrode active material layer further optionally includes a negative electrode conductive agent. In the embodiment of the present application, the type of the negative electrode conductive agent is not specifically limited. As an example, the negative electrode conductive agent may include at least one of superconducting carbon, conductive graphite, acetylene black, carbon black, Ketjen black, carbon dots, carbon nanotubes, graphene, and carbon nanofibers. In some embodiments, based on total mass of the negative electrode active material layer, the mass percentage of the negative electrode conductive agent is less than or equal to 5%.

In some embodiments, the negative electrode active material layer further optionally includes a negative electrode binder. In the embodiment of the present application, the type of the negative electrode binder is not specifically limited. As an example, the negative electrode binder may include at least one of styrene butadiene rubber (SBR), water-soluble unsaturated resin SR-1B, water-based acrylic resin (such as polyacrylic acid (PAA), polymethacrylic acid (PMAA), and polyacrylic acid sodium (PAAS)), polyacrylamide (PAM), polyvinyl alcohol (PVA), sodium alginate (SA), and carboxymethyl chitosan (CMCS). In some embodiments, based on total mass of the negative electrode active material layer, the mass percentage of the negative electrode binder is less than or equal to 5%.

In some embodiments, the negative electrode active material layer further optionally includes other auxiliaries. As an example, the other auxiliaries may include a thickener, such as, carboxymethyl cellulose sodium (CMC), and a PTC thermistor material. In some embodiments, based on total mass of the negative electrode active material layer, the mass percentage of other auxiliaries is less than or equal to 2%.

In some embodiments, the negative electrode current collector may be a metal foil or a composite current collector. As an example of the metal foil, a copper foil may be used. The composite current collector may include a high molecular material substrate layer and a metal material layer formed on at least one surface of the high molecular material substrate layer. As an example, the metal material may include at least one of copper, a copper alloy, nickel, a nickel alloy, titanium, a titanium alloy, silver, and a silver alloy. As an example, the high molecular material substrate layer may include at least one of polypropylene (PP), polyethylene terephthalate (PET), polybutylene terephthalate (PBT), polystyrene (PS), and polyethylene (PE).

The negative electrode active material layer is usually formed by coating a negative electrode slurry on the negative electrode current collector, followed by drying and cold pressing. The negative electrode slurry is generally formed by dispersing the negative electrode active material, the optional conductive agent, the optional binder and other optional auxiliaries in a solvent and sufficiently stirring the mixture. The solvent may be N-methyl pyrrolidone (NMP) or deionized water, but is not limited thereto. Of course, the preparation of the negative electrode plate is not limited to the above method, and the preparation method described above can also be used.

The negative electrode plate does not exclude other additional functional layers other than the negative electrode active material layer. For example, in some embodiments, the negative electrode plate in the present application further includes a conductive primer coating (e.g., composed of a conductive agent and a binder) sandwiched between the negative electrode current collector and the negative electrode active material layer and disposed on a surface of the negative electrode current collector. In some other embodiments, the negative electrode plate of the present application further includes a protective layer covering a surface of the negative electrode active material layer.

### [Electrolyte]

During charging and discharging of the battery cell, active ions are intercalated and deintercalated back and forth between the positive electrode plate and the negative electrode plate, and the electrolyte solution plays a role in conducting active ions between the positive electrode plate and the negative electrode plate. The present application has no specific limitation on a type of the electrolyte solution, which can be selected according to actual requirements.

The electrolyte solution includes an electrolyte salt and a solvent. Types of the electrolyte salt and the solvent are not specifically limited, and may be selected according to actual requirements.

When the battery cell of the present application is a lithium-ion battery, as an example, the electrolyte salt may include, but is not limited to at least one of lithium hexafluorophosphate (LiPF₆), lithium tetrafluoroborate (LiBF₄), lithium perchlorate (LiClO₄), lithium hexafluoroarsenate (LiAsF₆), lithium bis(fluorosulfonyl)imide (LiFSI), lithium bis(trifluoromethanesulfonyl)imide (LiTFSI), lithium trifluoromethanesulfonate (LiTFS), lithium difluoro(oxalato)borate (LiDFOB), lithium bis(oxalate)borate (LiBOB), lithium difluorophosphate (LiPO₂F₂), lithium difluoro bis(oxalato)phosphate (LiDFOP), and lithium tetrafluoro(oxalato)phosphate (LiTFOP).

When the battery cell of the present application is a sodium-ion battery, as an example, the electrolyte salt may include, but is not limited to at least one of sodium hexafluorophosphate (NaPF₆), sodium tetrafluoroborate (NaBF₄), sodium perchlorate (NaClO₄), sodium hexafluoroarsenate (NaAsF₆), sodium difluorosulfonylimide (NaFSI), sodium bis trifluoromethanesulfonimide (NaTFSI), sodium trifluoromethanesulfonate (NaTFS), sodium difluorooxalate borate (NaDFOB), sodium difluorooxalate borate (NaBOB), sodium difluorophosphate (NaPO₂F₂), sodium difluorooxalate phosphate (NaDFOP), and sodium tetrafluorooxalate phosphate (NaTFOP).

As an example, the solvent may include, but is not limited to at least one of ethylene carbonate (EC), propylene carbonate (PC), ethyl methyl carbonate (EMC), diethyl carbonate (DEC), dimethyl carbonate (DMC), dipropyl carbonate (DPC), methyl propyl carbonate (MPC), ethyl propyl carbonate (EPC), butylene carbonate (BC), fluoroethylene carbonate (FEC), methyl formate (MF), methyl acetate (MA), ethyl acetate (EA), propyl acetate (PA), methyl propionate (MP), ethyl propionate (EP), propyl propionate (PP), methyl butyrate (MB), ethyl butyrate (EB), 1,4-butyrolactone (GBL), sulfolane (SF), methylsulfonylmethane (MSM), ethyl methyl sulfone (EMS) and ethyl sulfonyl ethane (ESE).

In some embodiments, the electrolyte solution further optionally includes an additive. For example, the additive may include a negative electrode film-forming additive, or may include a positive electrode film-forming additive, and may further include an additive capable of improving certain performance of a battery, such as an additive for improving overcharging performance of the battery, an additive for improving high temperature performance of the battery, an additive for improving low temperature performance of the battery, etc.

In some embodiments, the positive electrode plate, the separator, and the negative electrode plate may be made into the electrode assembly by a winding process and/or a stacking process.

In some embodiments, the battery cell may includes an outer package. The outer package may be used to encapsulate the above electrode assembly and electrolyte solution.

In some embodiments, the outer package of the battery cell may be a hard shell, such as a hard plastic shell, an aluminum shell, and a steel shell. The outer package of the battery cell may also be a soft package, such as a bag-type soft package. A material of the soft package may be plastic, such as at least one of polypropylene (PP), polybutylene terephthalate (PBT), and polybutylene succinate (PBS).

In some embodiments, the positive electrode plate, the separator, and the negative electrode plate may be made into the electrode assembly by the winding process or the stacking process.

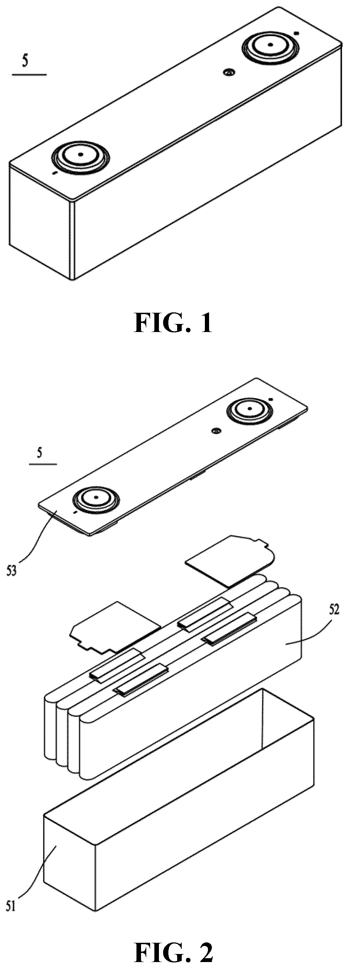

A shape of the battery cell is not particularly limited in the present application, and the battery cell may be a cylinder, a square, or any other shape. For example, FIG. 1 is a battery cell 5 in a square structure as an example.

In some embodiments, as shown in FIG. 1 and FIG. 2, the outer package may include a case 51 and a cover plate 53. The case 51 may include a bottom plate and a side plate connected to the bottom plate, and the bottom plate and the side plate enclose to form an accommodating cavity. The case 51 has an opening in communication with the accommodating cavity, and the cover plate 53 is configured to cover an opening to close the accommodating cavity. The positive electrode plate, the negative electrode plate, and the separator may be formed into an electrode assembly 52 by a winding process or a stacking process. The electrode assembly 52 is encapsulated in the accommodating cavity. The electrode assembly 52 is impregnated with the electrolyte solution. A number of the electrode assembly 52 included in the battery cell 5 can be one or more, and can be adjusted according to requirements.

A preparation method for the battery cell of the present application is well known. In some embodiments, the positive electrode plate, the separator, the negative electrode plate, and the electrolyte solution may be assembled to form the battery cell. As an example, the positive electrode plate, the separator, and the negative electrode plate may form the electrode assembly by a winding process and/or a stacking process; the electrode assembly is placed in the outer package; the electrolyte solution is poured in after drying; and the battery cell is obtained through processes such as vacuum encapsulation, standing, formation, and shaping.

In some embodiments of the present application, the battery cell according to the present application can be assembled into a battery module, the number of battery cells included in the battery module can be multiple, and the specific number may be adjusted according to the application and capacity of the battery module.

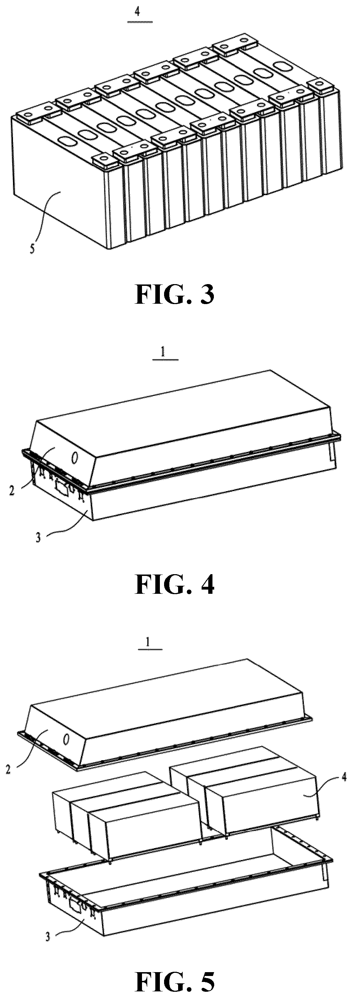

FIG. 3 is a schematic view of a battery module 4 as an example. As shown in FIG. 3, in the battery module 4, a plurality of battery cells 5 can be sequentially arranged in a length direction of the battery module 4. Of course, any other arrangements are also possible. The plurality of battery cells 5 may further be fixed by fasteners.

Optionally, the battery module 4 may further include a shell having an accommodating space, and the plurality of battery cells 5 are accommodated in the accommodating space.

In some embodiments, the above battery module may further be assembled into a battery pack, and the number of the battery modules included in the battery pack may be adjusted according to the application and capacity of the battery pack.

Both the battery module 4 and the battery pack may be used as specific examples of batteries in the embodiment of the present application.

FIG. 4 and FIG. 5 are schematic views of a battery pack 1 as an example. As shown in FIG. 4 and FIG. 5, the battery pack 1 may include a battery box and a plurality of battery modules 4 arranged in the battery box. The battery box includes an upper box body 2 and a lower box body 3, where the upper box body 2 is configured to cover the lower box body 3 to form an enclosed space for accommodating the battery modules 4. The plurality of battery modules 4 may be arranged in the battery box in any manner.

### Electrical apparatus

In a third aspect, the present application further provides an electrical apparatus, and the electrical apparatus includes at least one of a battery cell, a battery module, or a battery pack of the present application. The battery cell, the battery module, and the battery pack may be used as a power source of the electrical apparatus, or may be used as an energy storage unit of the electrical apparatus. The electrical apparatus may be, but is not limited to, mobile equipment (such as a mobile phone and a laptop), an electric vehicle (such as an all-electric vehicle, a hybrid electric vehicle, a plug-in hybrid electric vehicle, an electric bicycle, an electric scooter, an electric golf cart, and an electric truck), an electric train, a ship, a satellite, an energy storage system, etc.

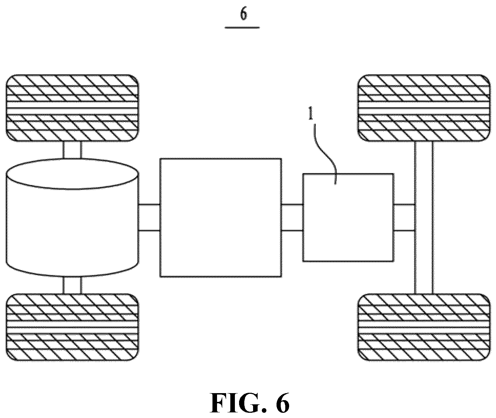

The electrical apparatus may select the battery cell, the battery module, or the battery pack according to use requirements thereof. FIG. 6 is a schematic view of an electrical apparatus as an example. The electrical apparatus 6 is an all-electric vehicle, a hybrid electric vehicle, a plug-in hybrid electric vehicle, or the like. In order to meet the requirements of the electrical apparatus for high power and high energy density, the battery pack 1 or a battery module may be used. As another example, the electrical apparatus may be a mobile phone, a tablet personal computer, a laptop, etc. The electrical apparatus is generally required to be thin and light, and may use a battery cell as a power source.

### Example

Examples of the present application will be described below. The examples described below are exemplary and only used to explain the present application, and are not to be construed as limiting the present application. Where specific techniques or conditions are not specified in the examples, the techniques or conditions described in the literature of the art or the product specifications are followed. Reagents or instruments used without specifying the manufacturers are conventional products that can be purchased form the market.

### Example 1 Preparation of lithium-ion battery

### (1) Preparation of positive electrode plate:

An aluminum foil with a thickness of 12 µm is used as a positive electrode current collector.

A positive electrode active material LiNi_{0.6}Co_{0.2}Mn_{0.2}O₂ (NCM622) , a conductive agent carbon black, and a binder polyvinylidene fluoride (PVDF) are fully stirred and mixed in an appropriate amount of N-methyl pyrrolidone (NMP) to be prepared into a positive electrode slurry. A mass ratio of NCM622, the conductive carbon black and PVDF in the positive electrode slurry is 97.5:1.4:1.1. The positive electrode slurry is coated on a current collector aluminum foil, dried under vacuum at 100°C, then cold pressed, then subjected to edge cutting, slicing, and striping, and then dried at 85°C under vacuum for 4 h, to prepare the positive electrode plate.

### (2) Preparation of negative electrode plate:

A copper foil with a thickness of 8 µm is used as a negative electrode current collector.

A negative electrode active material artificial graphite, a conductive agent carbon black, a binder styrene butadiene rubber (SBR), and a thickener sodium carboxymethylcellulose (CMC) are fully mixed according to a weight ratio of 97.4:2:0.5:0.1 and then are added into deionized water to prepare a negative electrode slurry. The negative electrode slurry is coated on the current collector copper foil, dried at 85°C, then subjected to cold pressing, edge cutting, slicing, and striping, and then dried under vacuum at 120°C for 12 h to prepare the negative electrode plate.

### (3) Preparation of electrolyte solution:

In an environment with a water content of less than 10 ppm, non-aqueous organic solvents such as ethylene carbonate, ethyl methyl carbonate and dimethyl carbonate are mixed according to a volume ratio of 1:1:1 to obtain a solvent of an electrolyte solution, and then lithium salt LiPF₆ and the mixed solvent are mixed to prepare an electrolyte solution with a lithium salt concentration of 1 mol/L.

### (4) Preparation of separator

A polyethylene film (PE) of 7 µm is used as a substrate.

A bonding polymer (polyethyl acrylate) and a liquid-retaining polymer are dispersed in a dimethyl carbonate (DMC) solvent to form a mixed system, and the mixed system is atomized and sprayed on the two surfaces of the polyethylene film to form polymer layers respectively. Water is used as an atomizing solvent, and a mass content of the bonding polymer (polyethyl acrylate) and the liquid-retaining polymer in the mixed system is 1%.

### (5) Preparation of lithium-ion battery:

The positive electrode plate, the separator, and the negative electrode plate mentioned above are stacked in order, so that the separator is positioned between the positive electrode plate and the negative electrode plate to play a separating role, and then winding is performed so that an electrode assembly is obtained; the electrode assembly is put into an outer package shell, and after drying, the electrolyte solution is injected thereto; and the lithium-ion battery is obtained through processes such as vacuum encapsulation, standing, formation, and shaping.

### Comparative Example 1

A lithium-ion battery is prepared by a method similar to that of Example 1. The difference from Example 1 is that a separator in Comparative Example 1 is a polyethylene film (PE) of 7 µm.

### Comparative Example 2

A lithium-ion battery is prepared by a method similar to that of Example 1. The difference from Example 1 is that a material of a liquid-retaining polymer of a separator in Comparative Example 2 is changed.

### Example 1-2 to Example 1-5

A lithium-ion battery is prepared by a method similar to that of Example 1. The difference from Example 1 is that the addition amount of bonding polymer is adjusted in a polymer layer of a separator in Example 1-2 to Example 1-6.

### Example 2-1 to Example 2-3

A lithium-ion battery is prepared by a method similar to that of Example 1. The difference from Example 1 is that the type of the liquid-retaining polymer is adjusted in a polymer layer of a separator in Example 2-1 to Example 2-3.

### Example 3-1 to Example 3-5

A lithium-ion battery is prepared by a method similar to that of Example 1. The difference from Example 1 is that a coating weight of a separator is adjusted in Example 3-1 to Example 3-5.

### Example 4-1

A lithium-ion battery is prepared by a method similar to that of Example 1. The difference from Example 1 is that a disposing position of a polymer layer of a separator is adjusted in Example 4-1. Specifically, the preparation steps of the separator include:
a polyethylene film (PE) of 7 µm is used as a separator substrate;
silicon oxide particles and the bonding polymer aqueous solution type polyacrylic acid are uniformly mixed in a proper amount of solvent deionized water at a mass ratio of 20:80 to obtain a coating slurry;
the prepared coating slurry is applied on two surfaces of the PE substrate using a coater to form a heat-resistant coating; and
a liquid-retaining polymer and a bonding polymer are dispersed in a dimethyl carbonate (DMC) solvent to form a mixed system, and the mixed system is atomized and sprayed on a surface of the heat-resistant coating to form the polymer layer, thereby obtaining the separator.

Data of examples and comparative examples are as shown in Table 1.

### Tested parts

### 1. Test of performance of lithium-ion battery (25 min fast charge cycle performance)

At 25°C, a lithium-ion battery is charged at a 3C rate and discharged at a 1C rate for a full charge-discharge cycle test until a capacity of the lithium-ion battery is decayed to 80% of an initial capacity, and the number of cycles is recorded.

### 2. Test of bonding force of separator

Positive and negative electrode plates and the separator are stacked into a laminate, the structure of which is a layer of negative electrode plate, a layer of separator and a layer of positive electrode plate; and a device containing the electrode plates and the separator is placed in a hot pressing machine and hot pressed for 120 S at 80°C and a pressure of 8000 N.

The hot-pressed electrode plates and separator are placed in a high-speed rail tensile testing machine, and the bonding force between the electrode plates and the separator displayed by the high-speed rail tensile testing machine is expressed as the bonding force of the separator.

### Test results

The test results are as shown in Table 1.

**Table 1**

| Item | Separator | | | | | | | | | | | Lithium-ion battery |
|---|---|---|---|---|---|---|---|---|---|---|---|---|
| | Liquid-retaining polymer | | | | | | | Coating weight of polymer coating (mg/1540.25 mm²) | Bonding polymer type | Mass ratio of liquid-retaining polymer to bonding polymer | Bonding force (N/m) | |
| | Monomer1 | Monomer 2 | Monomer 3 | Glass transition temperature Tg(°C) | Molecular weight (g/mol) | K | Sedimentation value m/q | | | | | 25 min fast charge cycle number |
| Comparative Example 1 | None | None | None | None | None | None | None | None | None | None | 0 | 1000 |
| Comparative Example 2 | 100% Ethylene oxide | / | / | -67 | 400000 | 0.9 | 1.5 | 1.5 | None | None | 2 | 1080 |
| Example 1 | 88% Ethyl vinyl ether | 12% Vinyl acetate | / | 0 | 300000 | 1.6 | 15 | 15 | Ethyl acrylate | 3:1 | 15 | 1500 |
| Example 1-2 | 88%Ethyl vinyl ether | 12% Vinyl acetate | / | 0 | 300000 | 1.6 | 15 | 1.5 | Ethyl acrylate | 9:1 | 10 | 1100 |
| Example 1-3 | 88%Ethyl vinyl ether | 12% Vinyl acetate | / | 0 | 300000 | 1.6 | 15 | 1.5 | Ethyl acrylate | 6:1 | 12 | 1340 |
| Example 1-4 | 88%Ethyl vinyl ether | 12% Vinyl acetate | / | 0 | 300000 | 1.6 | 15 | 1.5 | Ethyl acrylate | 2:1 | 21 | 1400 |
| Example 1-5 | 88%Ethyl vinyl ether | 12% Vinyl acetate | / | 0 | 300000 | 1.6 | 15 | 1.5 | Ethyl acrylate | 1:1 | 26 | 1150 |
| Example 1-6 | 88%Ethyl vinyl ether | 12% Vinyl acetate | / | 0 | 300000 | 1.6 | 15 | 1.5 | / | 1:0 | 16 | 1360 |
| Example 2-1 | 75% Vinylidene fluoride | 22% Hexafluoroethylene | 3% Ethylene | -69 | 700000 | / | 32 | 1.5 | Ethyl acrylate | 3:1 | 15 | 1600 |
| Example 2-2 | 60% Methyl methacrylate | 35% Butyl acrylate | 5% Acrylonitrile | -10 | 350000 | 1.1 | 18 | 1.5 | Ethyl acrylate | 3:1 | 15 | 1560 |
| Example 2-3 | 80% Butyraldehyde | 20% Polyvinyl alcohol | / | 55 | 180000 | 1.1 | 7 | 1.5 | Ethyl acrylate | 3:1 | 15 | 1480 |
| Example 3-1 | 88% Ethyl vinyl ether | 12% Vinyl acetate | / | 0 | 300000 | 1.6 | 15 | 1.0 | Ethyl acrylate | 3:1 | 12 | 1570 |
| Example 3-2 | 88% Ethyl vinyl ether | 12% Vinyl acetate | / | 0 | 300000 | 1.6 | 15 | 2.0 | Ethyl acrylate | 3:1 | 18 | 1630 |
| Example 3-3 | 88% Ethyl vinyl ether | 12% Vinyl acetate | / | 0 | 300000 | 1.6 | 15 | 0.5 | Ethyl acrylate | 3:1 | 10 | 1370 |
| Example 3-4 | 88% Ethyl vinyl ether | 12% Vinyl acetate | / | 0 | 300000 | 1.6 | 15 | 3.0 | Ethyl acrylate | 3:1 | 22 | 1340 |
| Example 3-5 | 88% Ethyl vinyl ether | 12% Vinyl acetate | / | 0 | 300000 | 1.6 | 15 | 3.5 | Ethyl acrylate | 3:1 | 25 | 1260 |
| Example 4-1 | 88% Ethyl vinyl ether | 12% Vinyl acetate | / | 0 | 300000 | 1.6 | 15 | 1.5 | Ethyl acrylate | 3:1 | 15 | 1750 |

In Table 1, 88% ethyl vinyl ether means that a molar percentage of ethyl vinyl ether is 88% based on the total molar amount of ethyl vinyl ether and vinyl acetate. The liquid-retaining polymer in Example 2-1 has a crystallinity of 10% and the melting temperature of 110°C.

Compared with Comparative Example 1, the embodiment of the present application adds the liquid-retaining polymer of the present application to the separator, and the cycle performance of the lithium-ion battery is improved. Compared with Comparative Example 1, the polymer layer is disposed on the surface of the separator in the embodiment of the present application, the polymer layer is in contact with the electrolyte solution, the polymer molecular chains are stretched and opened, the electrolyte solution can be diffused between the molecular chains, and a three-dimensional connected interface is constructed between the separator and the electrode plate. The introduction of the liquid-retaining polymer can form a uniform high wetting point between the separator and the electrode plate, and uniformly improve the wetting performance of the separator and the electrode plate, thereby increasing the liquid absorption rate of the separator and the electrode plate, and improving the cycle performance of the battery cell. Further introduction of the bonding polymer into the polymer layer can further improve the bonding capability of the interface, so that high adhesion is achieved between the separator and the electrode plate, and the connection between the separator and the electrode plate is more stable, which can alleviate the expansion of the electrode assembly to a certain extent, and can further improve the cycle performance of the battery cell.

While the present application has been described with reference to the preferred embodiments, various modifications may be made and components thereof may be replaced with equivalents without departing from the scope of the present application. In particular, the technical features mentioned in the various embodiments can be combined in any manner as long as there is no structural conflict. The present application is not limited to the particular embodiments disclosed herein, but rather includes all technical solutions falling within the scope of the claims.

## Claims

1. A separator, comprising:
a separator body; and
a polymer layer, disposed on at least one surface of the separator body, wherein the polymer layer comprises a liquid-retaining polymer,
wherein
the liquid-retaining polymer is added to a first solvent at 70°C to form a polymer system;
the polymer system is left to stand at 70°C for 8 h, and after standing at 25°C for more than or equal to 24 h, the polymer system is filtered by means of a 200-mesh filter screen, thereby leaving a first substance,
wherein
mass of the liquid-retaining polymer is q, and a unit thereof is g;
mass of the first substance is m, and a unit thereof is g;
the liquid-retaining polymer and the first substance satisfy: 5≤m/q≤1000; and
a bonding force of the separator is greater than or equal to 10 N/m.

2. The separator according to claim 1, wherein the bonding force of the separator is in a range from 10 N/m to 30 N/m.

3. The separator according to claim 1 or 2, wherein the polymer layer comprises a bonding polymer, and the bonding polymer comprises one or more of epoxy resins, polyurethanes, organic silicons, polyimides, polyacrylates, polymethacrylates, and polyvinyl acetates (VAE emulsions);
optionally, based on total mass of the polymer layer, a ratio of the mass percentage of the liquid-retaining polymer to the mass percentage of the bonding polymer is (1-9): 1.

4. The separator according to any one of claims 1 to 3, wherein the liquid-retaining polymer comprises a fluoropolymer;
crystallinity of the fluoropolymer measured by differential scanning calorimetry is Xc₁, 0<Xc₁≤30%; and
the melting temperature of the fluoropolymer is Tₘ₁, a unit thereof is °C, and 0<Tₘ₁≤140.

5. The battery cell according to claim 4, wherein the glass transition temperature of the fluoropolymer is T_{g1}, a unit thereof is °C, and -150≤T_{g1}≤60.

6. The battery cell according to claim 4 or 5, wherein the fluoropolymer comprises at least one of a building block represented by formula (AI) to a building block represented by formula (AIII), 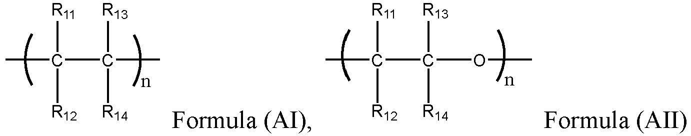
in formula (AI) and formula (AII), R₁₁, R₁₂, R₁₃ and R₁₄ each independently comprise a hydrogen atom, a fluorine atom, a chlorine atom, a bromine atom, substituted or unsubstituted C1-C3 alkyl, or substituted or unsubstituted C1-C3 alkoxy, and at least one of R₁₁, R₁₂, R₁₃ and R₁₄ contains a fluorine atom; 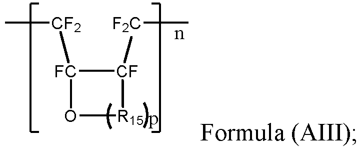
in formula (AIII), R₁₅ comprises a single bond, and substituted or unsubstituted C1-C3 alkyl; p is a positive integer selected from 1 to 3; and n is a positive integer selected from 1000 to 30000.

7. The battery cell according to any one of claims 1 to 6, wherein the liquid-retaining polymer further comprises an ether polymer, and the ether polymer is made into a sheet-like structure; the sheet-like structure obtains an elastic modulus G'-loss modulus G" curve through dynamic frequency scanning test at (Tₘ₂+20)°C, the slope of the elastic modulus G'-loss modulus G" curve is K₁, 1<K₁<∞, and Tₘ₂°C represents the melting temperature of the ether polymer; optionally, 1<K₁≤100; and further optionally, 1<K₁≤10.

8. The battery cell according to claim 7, wherein the ether polymer comprises a building block represented by formula (BI) and/or a building block represented by formula (BII), 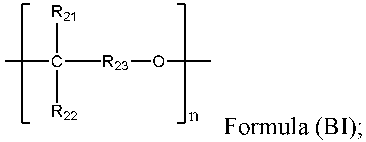
in formula (BI), R₂₁ and R₂₂ each independently comprise a hydrogen atom, substituted or unsubstituted C1-C3 alkyl, or substituted or unsubstituted C1-C3 alkoxy; and R₂₃ comprises substituted or unsubstituted C1-C5 alkylene; 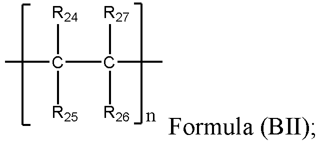
in formula (BII), R₂₄ to R₂₇ each independently comprise a hydrogen atom, substituted or unsubstituted C1-C3 alkyl, substituted or unsubstituted C1-C3 alkoxy or an ether group, and at least one of R₂₄ to R₂₇ comprises substituted or unsubstituted C1-C3 alkoxy or an ether group.

9. The battery cell according to any one of claims 1 to 8, wherein the liquid-retaining polymer comprises an ester polymer, and the ester polymer is made into a sheet-like structure; the sheet-like structure obtains an elastic modulus G'-loss modulus G" curve through dynamic frequency scanning test at (Tₘ₃+20)°C, the slope of the elastic modulus G'-loss modulus G" curve is K₂, 1<K₂<∞, and Tₘ₃°C represents the melting temperature of the ester polymer; optionally, 1<K₂≤100; and further optionally, 1<K₂≤10.

10. The battery cell according to claim 9, wherein the ester polymer comprises a building block represented by formula (CI) and/or a building block represented by formula (CII), 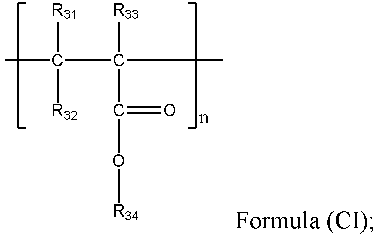
in formula (CI), R₃₁, R₃₂ and R₃₃ each independently comprise a hydrogen atom or substituted or unsubstituted C1-C8 alkyl; and R₃₄ comprises substituted or unsubstituted C1-C8 alkyl, or substituted or unsubstituted C1-C8 hydroxyalkyl; 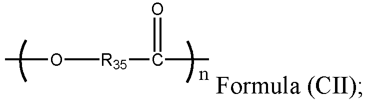
in formula (CII), R₃₅ comprises substituted or unsubstituted C2-C6 methylene; and optionally, R₃₅ each independently comprises substituted or unsubstituted C2-C4 methylene.

11. The battery cell according to any one of claims 1 to 10, wherein the liquid-retaining polymer comprises an aldehyde-ketone polymer, and the aldehyde-ketone polymer is made into a sheet-like structure; the sheet-like structure obtains an elastic modulus G'-loss modulus G" curve through dynamic frequency scanning test at (Tₘ₄+20)°C, the slope of the elastic modulus G'-loss modulus G" curve is K₃, 0.8≤K₃<∞, and Tₘ₄°C represents the melting temperature of the aldehyde-ketone polymer; optionally, 0.8≤K₃≤100; and further optionally, 0.8≤K₃≤10.

12. The battery cell according to claim 11, wherein the aldehyde-ketone polymer comprises a building block represented by formula (DI) and/or a building block represented by formula (DII), 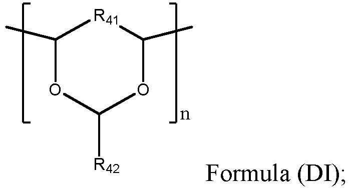
in formula (DI), R₄₁ comprises a single bond, and substituted or unsubstituted C1-C6 methylene; and R₄₂ comprises a hydrogen atom, and substituted or unsubstituted C1-C6 alkyl; 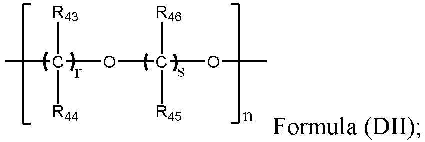
in formula (DII), R₄₃ to R₄₆ each independently comprise a hydrogen atom, hydroxyl, substituted or unsubstituted C1-C3 alkyl, substituted or unsubstituted C1-C3 hydroxyalkyl, or substituted or unsubstituted C1-C3 alkoxy; and r and s are each independently selected from integers in a range from 0 to 5, and at least one of r and s is selected from a positive integer.

13. The battery cell according to any one of claims 1 to 12, wherein the molecular weight of the liquid-retaining polymer is in a range from 1.2×10⁵g/mol to 1×10⁶g/mol.

14. The separator according to any one of claims 1 to 13, wherein the separator body comprises a substrate, and the polymer layer is disposed on at least one surface of the substrate.

15. The separator according to any one of claims 1 to 13, wherein the separator body comprises a substrate and a heat-resistant coating, the heat-resistant coating is disposed on at least one surface of the substrate, and the polymer layer is disposed on a surface of the heat-resistant coating facing away from the substrate.

16. The separator according to any one of claims 1 to 15, wherein
a coating weight of the polymer layer ranges from 0.5 mg/1540.25 mm2 to 5 mg/1540.25 mm².

17. A battery cell, comprising the separator according to any one of claims 1 to 16.

18. A battery, comprising the battery cell according to claim 17.

19. An electrical apparatus, comprising the battery according to claim 18.
